# EUROPÄISCHE PATENTSCHRIFT

(11) **EP 2 536 777 B1**
(45) Veröffentlichungstag und Bekanntmachung des Hinweises auf die Patenterteilung: **20.04.2016**
(21) Anmeldenummer: 11705503.8
(22) Anmeldetag: 17.02.2011
(51) Int. Cl.: C08G 64/02, C09D 169/00

(54) **POLYMERDISPERSION, DIE EIN HOCHVERZWEIGTES POLYCARBONAT MIT UNGESÄTTIGTEN FETTSÄUREGRUPPEN ENTHÄLT**
POLYMER DISPERSION COMPRISING A HIGHLY BRANCHED POLYCARBONATE WITH UNSATURATED FATTY ACID GROUPS
DISPERSION DE POLYMÈRE QUI CONTIENT UN POLYCARBONATE TRÈS RAMIFIÉ COMPRENANT DES GROUPES ACIDE GRAS INSATURÉ

(30) Priorität: 18.02.2010 EP 10153939
(43) Veröffentlichungstag der Anmeldung: 26.12.2012
(73) Patentinhaber: BASF SE, 67056 Ludwigshafen am Rhein (DE)
(72) Erfinder: ROLLER, Sebastian, 68167 Mannheim (DE); HABERECHT, Monika, 67063 Ludwigshafen (DE); BRUCHMANN, Bernd, 67251 Freinsheim (DE)
(74) Vertreter: BASF IP Association
(86) Internationale Anmeldenummer: PCT/EP2011/052324
(87) Internationale Veröffentlichungsnummer: WO 2011/101395

(56) Entgegenhaltungen:
- WO-A1-2008/071801
- WO-A1-2010/076253
- US-A1- 2006 052 510

## Beschreibung

Die vorliegende Erfindung betrifft eine Polymerdispersion, die ein hochverzweigtes Polycarbonat mit ungesättigten Fettsäuregruppen enthält. Die Erfindung betrifft weiterhin hochverzweigte Polycarbonate mit Gruppen, die sich von ungesättigten Fettsäuren ableiten, ein Verfahren zur Herstellung solcher hochverzweigter Polycarbonate und die Verwendung dieser hochverzweigten Polycarbonate zur Verbesserung der Härtungseigenschaften von Beschichtungsmitteln, die auf einer wässrigen Acrylatdispersion basieren.

Eine wesentliche Eigenschaft eines Beschichtungsmittels, wie z. B. eines Anstrichmittels, ist die Härteentwicklung nach dem Applizieren, die beschreibt, wie die Härte des Films aufgebaut und die Klebrigkeit abgebaut wird, bis die Endhärte erreicht ist. Es besteht weiterhin Bedarf an Beschichtungsmitteln mit verbesserten Härtungseigenschaften. Diese können sich z. B. in einer Verkürzung der Härtungszeit, guten Härtungseigenschaften bei verringertem Anteil an organischen Lösungsmitteln oder einer höheren Endhärte widerspiegeln. Dabei sollen andere wichtige anwendungstechnische Eigenschaften, wie Glanz, Chemikalienbeständigkeit, etc. möglichst nicht verschlechtert werden.

Alkydharze sind Polyesterharze, die mehrbasige Säuren, mehrwertige Alkohole (Polyole) und Monocarbonsäuren eingebaut enthalten. Sie sind immer noch eine bedeutende Bindemittelklasse für die Herstellung von Lacken. Oxidativ vernetzende (oxidativ trocknende) Alkydharze enthalten vor allem mehrfach ungesättigte Fettsäuren. Die Filmverfestigung erfolgt bei ihnen durch chemische Vernetzung unter Einbeziehung des Luftsauerstoffs. Die Trocknungseigenschaften können dabei z. B. durch die Art und Menge der zur Herstellung eingesetzten Monocarbonsäuren beeinflusst werden. Möglich ist auch der Einsatz von trocknungsbeschleunigenden Katalysatoren, so genannten Trockenstoffen (Sikkativen). Traditionelle Alkydbindemittel sind üblicherweise lösemittelbasiert und ihr Einsatz unter dem Gesichtspunkt der VOC-Reduzierung ist heute nicht mehr attraktiv. Kunstharze, die neben den Bestandteilen Polycarbonsäure, Polyol und Monocarbonsäure weitere Bestandteile enthalten, z. B. Styrole, Acrylate, Polyamide, Urethane, Epoxide, Silicone, werden als "modifizierte Alkydharze" bezeichnet.

Eine weitere bedeutende Bindemittelklasse für die Herstellung von Anstrichfarben oder Überzugsmitteln zum Beschichten von Leder, Papier, Kunststofffolien, etc. sind wässrige Polymerdispersionen, die beim Verdampfen des wässrigen Dispergiermediums Polymerfilme bilden. Es hat nicht an Versuchen gefehlt, diese Polymerdispersionen durch geeignete Zusätze zu verbessern bzw. im Hinblick auf bestimmte Anwendungsbereiche, wie die Optimierung von Härteeigenschaften. Vielfach weisen diese Zusätze jedoch ihrerseits Nachteile auf, beispielsweise eine gewisse Flüchtigkeit, die sich dann negativ auf den VOC-Wert der daraus erhaltenen Beschichtungen auswirkt.

Die WO 2005/003186 beschreibt ein Verfahren zur Herstellung wässriger Polymerdispersionen auf Basis von Copolymeren, die wenigstens ein hydrophobes Allyl-, Vinyl-, Malein- oder Dien-Monomer einpolymerisiert enthalten, wobei die Polymerisation in Gegenwart wenigstens eines dendritischen Polymers erfolgt.

Die WO 2005/026234 beschreibt hochfunktionelle, hoch- oder hyperverzweigte Polycarbonate sowie deren Herstellung und Verwendung zur Herstellung von Druckfarben.

Die WO 2006/089940 beschreibt hochfunktionelle, hoch- oder hyperverzweigte Polycarbonate, ein Verfahren zu ihrer Herstellung sowie ihre Verwendung zur Herstellung von Lacksystemen.

Die WO 2007/135032 beschreibt die Verwendung von hyperverzweigten Polycarbonaten als Dispergiermittel für Pigmente.

Die WO 2008/071801 beschreibt Polymerdispersionen, die hochverzweigte Polycarbonate enthalten.

Die WO 2009/065867 beschreibt die Verwendung hochverzweigter Polymere zur Herstellung von Polymerdispersionen mit verbesserter Gefrier-/Tau-Stabilität. Bei den hochverzweigten Polymeren kann es sich um Polycarbonate handeln.

Die WO 2009/065867 beschreibt die Verwendung hochverzweigter Polymere zur Herstellung von Polymerdispersionen für Glanzfarben. Bei den hochverzweigten Polymeren kann es sich wiederum um Polycarbonate handeln.

Die WO 2009/109622 beschreibt Polyurethandispersionen, die wenigstens ein hochverzweigtes Polymer enthalten. Bei den hochverzweigten Polymeren kann es sich wiederum um Polycarbonate handeln.

Die in den zuvor genannten Dokumenten beschriebenen Polycarbonate weisen keine ungesättigten Gruppen auf, die sich für eine Vernetzungsreaktion eignen.

Die WO 2004/016700 beschreibt eine wässrige Copolymerdispersion auf Wasserbasis, die durch Copolymerisation wenigstens eines mit Alkylengruppen funktionalisierten dendritischen Polymers auf ein Polymergerüst von ungesättigten Monomeren erhältlich ist. Die so erhaltenen Copolymerdispersionen eignen sich als Bindemittel für Anstrichmittel und zeichnen sich durch eine verbesserte Blockfestigkeit der entsprechenden Beschichtungen aus. Mit Alkenylgruppen modifizierte hochverzweigte Polycarbonate und speziell oxidativ vernetzbare hochverzweigte Polycarbonate sind nicht beschrieben. Auch eine Verwendung der dendritischen Polymere zur Verbesserung der Härtungseigenschaften wässriger Polymerdispersionen ist nicht offenbart.

WO 2004/016701 betrifft im Unterschied zur WO 2004/016700 Homo- oder Copolymerdispersionen, die eine physikalische Mischung aus Homo- oder Copolymeren ungesättigter Monomere und wenigstens einem mit Alkylengruppen funktionalisierten dendritischen Polymer umfassen.

Die WO 2003/062306 beschreibt kettenverlängerte dendritische Polyether. Diese können unter Anderem terminale Gruppen aufweisen, die sich von ungesättigten Fettsäuren ableiten. Als ein mögliches Einsatzgebiet ist die Verwendung als Pigmentverteiler für Beschichtungsmittel auf Wasserbasis beschrieben.

Die EP 2 009 072 A1 beschreibt eine wässrige Polymerzusammensetzung, die ein autooxidierbares Material und ein Emulsionspolymer enthält, wobei das Emulsionspolymer ein ethylenisch ungesättigtes Monomer mit Carbonylgruppen einpolymerisiert enthält. Diese wässrigen Polymerzusammensetzungen eignen sich zur Herstellung von Beschichtungsmitteln mit verbesserter Wiederüberstreichbarkeit während des Trocknens.

WO 2004/037928 beschreibt eine lufttrocknende wässrige Harzzusammensetzung, bestehend aus einem Fettsäure-funktionalisierten hyperverzweigten Polymer, welches an der Luft trocknet, einem nicht amphiphilen Alkydharz, einem Trockenstoff und einem Stabilisator. Auch in diesem Dokument sind oxidativ vernetzbare Alkenylgruppenmodifizierte hochverzweigte Polycarbonate nicht beschrieben. Auch eine Verwendung der Fettsäure-funktionalisierten hyperverzweigten Polymere zur Verbesserung der Härtungseigenschaften wässriger Polymerdispersionen ist nicht offenbart.

Die WO 2009/029479 beschreibt dendritische Polymere, die als Sauerstofffänger in Verpackungsmaterialien wirken. Bei den dendritischen Polymeren im Sinne dieses Dokuments kann es sich um strukturell sehr unterschiedliche, in irgendeiner Weise verzweigte Polymere handeln. Umfasst sind z.B. sowohl Dendrimere im eigentlichen Sinne (d.h. mit einem idealen Verzweigungsgrad von 100 %), wie auch verzweigte Pfropfcopolymere. Die Polymere sind weiterhin ausgewählt unter einer Vielzahl verschiedener Polymerklassen, wobei Polycarbonate lediglich als mögliche aber nicht bevorzugte Ausführungsform erwähnt sind. Bevorzugt ist nach der Lehre dieses Dokuments der Einsatz von dendritischen Polyestern und konkret von BOLTORN ® U3000 und W3000 der Fa. Perstorp. Bei den Sauerstoff-fangenden Gruppen kann es sich ganz allgemein um organische Gruppen mit wenigstens einer C-C-Doppelbindung handeln. Diese sind wiederum ausgewählt unter einer Vielzahl verschiedener Gruppen, wobei als eine mögliche Ausführungsform auch von ungesättigten Fettsäuren abgeleitete Gruppen erwähnt sind. Die Ausführungsbeispiele beschreiben Co-Extrudate von PET-Pellets und von BOLTORN U3000 bzw. von mit Linolensäure modifiziertem BOLTORN W3000. Aus diesen werden durch Blasformen Plastikflaschen hergestellt, die eine geringere Sauerstoffdurchlässigkeit aufweisen sollen als herkömmliche PET-Flaschen. Wässrige Polymerdispersionen und darauf beruhende Anstrichmittel, die wenigstens ein hochverzweigtes Polycarbonat mit ungesättigten Fettsäuregruppen enthalten, sind in der WO 2009/029479 nicht beschrieben. Zudem hat sich gezeigt, dass hochverzweigte einfache Polyester mit ungesättigten Fettsäuregruppen und speziell BOLTORN U3000 (ein mit ungesättigten Fettsäuregruppen modifizierter dendritischer Polyester) zur Verbesserung der Härteentwicklung von Polymerdispersionen deutlich schlechter geeignet sind, als die erfindungsgemäß eingesetzten hochverzweigten Polycarbonate mit ungesättigten Fettsäuregruppen.

Der vorliegenden Erfindung liegt die Aufgabe zu Grunde, neue Additive für Beschichtungsmittel, insbesondere für wässrige Polymerdispersion zur Verfügung zu stellen. Diese sollen verbesserte anwendungstechnische Eigenschaften und insbesondere eine verbesserte Härteentwicklung und/oder eine höhere Endhärte aufweisen.

Überraschenderweise wurde gefunden, dass diese Aufgabe durch den Einsatz von hochverzweigten Polycarbonaten mit langkettigen einfach oder mehrfach ungesättigten Kohlenwasserstoffketten gelöst wird.

Gegenstand der Erfindung ist daher eine wässrige Polymerdispersion Pd), enthaltend:
- ein Emulsionspolymerisat wenigstens eines α,β-ethylenisch ungesättigten Monomers M) und
- wenigstens ein hochverzweigtes Polycarbonat, das wenigstens einen C₈- bis C₃₂-Alkenylrest mit mindestens einer Kohlenstoff-Kohlenstoff-Doppelbindung umfasst.

Ein weiterer Gegenstand der Erfindung ist ein Anstrichmittel, enthaltend
- eine wässrige Polymerdispersion Pd), wie zuvor und im Folgenden definiert,
- gegebenenfalls wenigstens ein Pigment,
- gegebenenfalls wenigstens einen Füllstoff,
- gegebenenfalls weitere Hilfsmittel, und
- Wasser.

Spezielle Ausführungen sind Anstrichmittel in Form eines Klarlacks und Anstrichmittel in Form einer Dispersionsfarbe.

Ein weiterer Gegenstand der Erfindung ist ein hochverzweigtes Polycarbonat gemäß Anspruch 12.

Eine spezielle Ausführungsform der erfindungsgemäßen und erfindungsgemäß eingesetzten hochverzweigten Polycarbonate sind oxidativ vernetzende hochverzweigte Polycarbonate. Wie bei oxidativ vernetzenden Alkydharzen, leiten sich die Alkenylreste der oxidativ vernetzenden hochverzweigten Polycarbonate zumindest teilweise von Fettsäuren ab, die zwei oder mehr (z. B. 3, 4 oder 5) Kohlenstoff-Kohlenstoff-Doppelbindungen aufweisen. Mit anderen Worten, weisen die oxidativ vernetzenden Alkydharze Alkenylreste auf, die formal aus der entsprechenden zwei oder mehrfach ungesättigten C₈- bis C₃₂-Carbonsäure durch Entfernen der Carboxylgruppe erhalten werden.

Bevorzugt weisen die erfindungsgemäßen und erfindungsgemäß eingesetzten hochverzweigten Polycarbonate mindestens einen C₈- bis C₃₂-Alkenylrest auf, der ausschließlich nicht aktivierte Kohlenstoff-Kohlenstoff-Doppelbindungen umfasst. Unter nichtaktivierten Kohlenstoff-Kohlenstoff-Doppelbindungen werden im Rahmen der Erfindung solche verstanden, bei denen die Kohlenstoffatome der Doppelbindung nicht direkt an ein Sauerstoffatom in Etherbindung und nicht direkt an eine -C(=O)-Gruppe (Carbonyl- oder Carboxylgruppe) gebunden sind.

Bevorzugt weisen die erfindungsgemäßen und erfindungsgemäß eingesetzten hochverzweigten Polycarbonate mindestens einen C₈- bis C₃₂-Alkenylrest auf, der mindestens zwei isolierte (nicht konjugierte) Kohlenstoff-Kohlenstoff-Doppelbindungen umfasst.

Zusätzlich können die erfindungsgemäßen und erfindungsgemäß eingesetzten hochverzweigten Polycarbonate mindestens einen C₈- bis C₃₂-Alkenylrest aufweisen, der mindestens zwei konjugierte Kohlenstoff-Kohlenstoff-Doppelbindung umfasst. Diese führen in der Regel zu einer Beschleunigung der oxidativen Vernetzung und eignen sich zur Modifizierung des Vernetzungsverhaltens.

Zusätzlich können die erfindungsgemäßen und erfindungsgemäß eingesetzten hochverzweigten Polycarbonate mindestens einen C₈- bis C₃₂-Alkylrest (d. h. einen gesättigten C₈- bis C₃₂-Kohlenwasserstoffrest) aufweisen.

Ein weiterer Gegenstand der Erfindung ist ein Verfahren zur Herstellung eines hochverzweigten Polycarbonats, das wenigstens einen C₈- bis C₃₂-Alkenylrest mit mindestens einer Kohlenstoff-Kohlenstoff-Doppelbindung umfasst, bei dem man wenigstens ein organisches Carbonat (A) mit wenigstens einem mindestens trifunktionellen Alkohol (B) und wenigstens einer Verbindung (C) umsetzt, wobei die Verbindung (C)
- einen C₈- bis C₃₂-Alkenylrest mit mindestens einer Kohlenstoff-Kohlenstoff-Doppelbindung und
- eine gegenüber Hydroxylgruppen reaktive funktionelle Gruppe aufweist.

Bevorzugt ist ein Verfahren zur Herstellung eines hochverzweigten Polycarbonats, das wenigstens einen C₈- bis C₃₂-Alkenylrest mit mindestens einer Kohlenstoff-Kohlenstoff-Doppelbindung umfasst, bei dem man
a) wenigstens ein organisches Carbonat (A) mit wenigstens einem mindestens trifunktionellen Alkohol (B) unter Eliminierung von Alkoholen zu einem Kondensationsprodukt (K) umsetzt,
b) das Kondensationsprodukt (K) weiter unter Eliminierung von Alkoholen zu einem hochverzweigten Polycarbonat (P) umsetzt, wobei zumindest ein Teil der eliminierten Alkohole aus dem Reaktionsgemisch entfernt wird,
wobei zur Umsetzung in Schritt b) zusätzlich wenigstens eine Verbindung (C) eingesetzt wird, die einen C₈- bis C₃₂-Alkenylrest mit mindestens einer Kohlenstoff-Kohlenstoff-Doppelbindung und die eine gegenüber Hydroxylgruppen oder Carbonatgruppen reaktive funktionelle Gruppe aufweist und/oder das hochverzweigte Polycarbonat (P) im Anschluss an Schritt b) mit wenigstens einer Verbindung (C) umgesetzt wird.

Ein weiterer Gegenstand der Erfindung sind die nach dem zuvor und im Folgenden beschriebenen Verfahren erhältlichen hochverzweigten Polycarbonate.

Ein weiterer Gegenstand der Erfindung ist ein Verfahren zur Herstellung einer wässrigen Polymerdispersion Pd), durch radikalische Emulsionspolymerisation wenigstens eines Monomers M), bei dem vor und/oder während und/oder nach der Emulsionspolymerisation wenigstens ein hochverzweigtes Polycarbonat, wie zuvor und im Folgenden beschrieben, zugegeben wird.

Eine Zugabe nach der Emulsionspolymerisation umfasst dabei auch eine Zugabe im Rahmen der Formulierung eines Produkts, das ein Emulsionspolymerisat auf Basis wenigstens eines α,β-ethylenisch ungesättigten Monomers M) enthält. Dazu kann wenigstens ein hochverzweigtes Polycarbonat, wie zuvor und im Folgenden definiert, als Additiv z. B. einem Anstrichmittel oder einer Papierstreichmasse zugegeben werden.

Ein weiterer Gegenstand der Erfindung ist die Verwendung wenigstens eines hochverzweigten Polycarbonats, wie zuvor und im Folgenden definiert, als Additiv für ein Beschichtungsmittel, das ein Emulsionspolymerisat auf Basis wenigstens eines ethylenisch ungesättigten Monomers enthält, zur Verbesserung der Härteentwicklung der daraus hergestellten Beschichtungen.

Ein weiterer Gegenstand der Erfindung ist Verwendung wenigstens eines hochverzweigten Polycarbonats, wie zuvor und im Folgenden definiert, als Additiv für ein Beschichtungsmittel, das ein Emulsionspolymerisat auf Basis wenigstens eines ethylenisch ungesättigten Monomers enthält, zur Erhöhung der Endhärte der daraus hergestellten Beschichtungen.

Der Einsatz der erfindungsgemäßen hochverzweigten Polycarbonate bringt wenigstens einen der folgenden Vorteile mit sich:
- Verbesserung der Härteentwicklung bei Beschichtungen auf Basis von wässrigen Polymerdispersionen mit Zusatz der hochverzweigten Polycarbonate,
- Verbesserung der Endhärte bei Beschichtungen auf Basis von wässrigen Polymerdispersionen mit Zusatz der hochverzweigten Polycarbonate,
- gute Verträglichkeit der eingesetzten hochverzweigten Polycarbonate mit einer Vielzahl Dispersionen,
sowie zusätzlich:
- Möglichkeit zur Verringerung der Viskosität gegenüber wässrigen Polymerdispersionen ohne Zusatz hochverzweigter Polycarbonate,
- Möglichkeit zur Herstellung wässriger Polymerdispersionen mit erhöhtem Feststoffgehalt gegenüber ohne Zusatz hochverzweigter Polycarbonate hergestellten Dispersionen,
- Möglichkeit zur Steuerung der Glasübergangstemperatur T_{G} der in den wässrigen Polymerdispersionen Pd) enthaltenen Emulsionspolymerisate bei Zugabe vor und/oder während der Emulsionspolymerisation,
- Möglichkeit zur Verringerung der Mindestfilmbildetemperatur MFT, insbesondere bei Zugabe nach der Emulsionspolymerisation,
- ein zumindest teilweiser Verzicht auf Additive, die den VOC-Gehalt der Dispersionen erhöhen.

Ein geeigneter Messwert für die Härteentwicklung einer Beschichtung und die erhaltene Endhärte ist die Pendelhärte nach König, bestimmt nach DIN 53157. Durch wiederholte Messung der Pendelhärte im Verlauf der Härtung, z. B. in einem Zeitraum von einer Stunde nach Applikation der Beschichtung bis 28 Tage nach Applikation der Beschichtung, kann die Härteentwicklung verfolgt und das Härtungsverhalten verschiedener Beschichtungen verglichen werden. Ein weiterer geeigneter Messwert für die Härteentwicklung einer Beschichtung und die erhaltene Endhärte ist die Bleistifthärte. Geeignet ist auch die Dynamisch-Mechanische Thermo-Analyse (DMTA). Dazu wird an eine Materialprobe eine sinusförmige oszillierende Kraft angelegt und die Deformation des Materials gemessen. Dabei wird sowohl die Amplitude als auch die Phasenverschiebung der Deformation bezüglich der angelegten Kraft bestimmt. Aus den Messwerten können die viskoelastischen Eigenschaften einer Probe als Funktion von Zeit und Temperatur bestimmt werden. Neben der Glasübergangstemperatur Tg sind dies der Elastizitätsmodul E und der Schubmodul G des Werkstoffs.

Die folgenden Ausführungen zu "hochverzweigten Polymeren" gelten, soweit nicht anderes angegeben, sowohl für die erfindungsgemäßen und erfindungsgemäß verwendeten hochverzweigten Polycarbonate, die wenigstens einen C₈- bis C₃₂-Alkenylrest mit mindestens einer Kohlenstoff-Kohlenstoff-Doppelbindung umfassen, als auch für hochverzweigte Polycarbonat-Zwischenprodukte, die noch einer Umsetzung zur Einführung wenigstens eines C₈- bis C₃₂-Alkenylrest mit mindestens einer Kohlenstoff-Kohlenstoff-Doppelbindung unterzogen werden müssen.

Der Ausdruck "hochverzweigte Polymere" bezeichnet im Rahmen dieser Erfindung ganz allgemein Polymere, die sich durch eine stark verzweigte Struktur und eine hohe Funktionalität auszeichnen. Zur allgemeinen Definition hochverzweigter Polymere wird auch auf P. J. Flory, J. Am. Chem. Soc. 1952, 74, 2718, und H. Frey et al., Chem. Eur. J. 2000, 6, Nr. 14, 2499, Bezug genommen (dort abweichend von der hier gewählten Definition als "hyperbranched polymers" bezeichnet).

Zu den hochverzweigten Polymeren im Sinne der Erfindung zählen Sternpolymere, Dendrimere, Arborole und davon verschiedene hochverzweigte Polymere, wie hyperverzweigte Polymere.

Sternpolymere sind Polymere, bei denen von einem Zentrum drei oder mehr Ketten ausgehen. Das Zentrum kann dabei ein einzelnes Atom oder eine Atomgruppe sein. Dendrimere leiten sich strukturell von den Sternpolymeren ab, wobei jedoch die einzelnen Ketten jeweils ihrerseits sternförmig verzweigt sind. Sie entstehen, ausgehend von kleinen Molekülen, durch eine sich ständig wiederholende Reaktionsfolge, wobei immer höhere Verzweigungen resultieren, an deren Enden sich jeweils funktionelle Gruppen befinden, die wiederum Ausgangspunkt für weitere Verzweigungen sind. So wächst mit jedem Reaktionsschritt die Zahl der Monomer-Endgruppen exponentiell an, wobei am Ende eine, im Idealfall kugelförmige, Baumstruktur entsteht. Ein charakteristisches Merkmal der Dendrimere ist die Anzahl der zu ihrem Aufbau durchgeführten Reaktionsstufen (Generationen). Auf Grund ihres einheitlichen Aufbaus (im Idealfall enthalten alle Äste exakt dieselbe Anzahl von Monomereinheiten) sind Dendrimere im Wesentlichen monodispers, d. h. sie weisen in der Regel eine definierte Molmasse auf.

Molekular wie strukturell einheitliche hochverzweigte Polymere werden im Folgenden auch einheitlich als Dendrimere bezeichnet.

"Hyperverzweigte Polymere" sind im Rahmen dieser Erfindung hochverzweigte Polymere, die im Gegensatz zu den zuvor genannten Dendrimeren sowohl molekular wie auch strukturell uneinheitlich sind. Sie weisen Seitenketten und/oder Seitenäste unterschiedlicher Länge und Verzweigung sowie eine Molmassenverteilung (Polydispersität) auf.

Hochverzweigte Polymere weisen vorzugsweise einen Verzweigungsgrad (Degree of Branching, DB) pro Molekül von 10 bis 100 %, bevorzugt 10 bis 90 % und insbesondere 10 bis 80 %, auf. Der Verzweigungsgrad DB ist dabei definiert als DB (%) = (T + Z) / (T + Z + L) x 100, mit
- T: mittlere Anzahl der terminal gebundenen Monomereinheiten,
- Z: mittlere Anzahl der Verzweigungen bildenden Monomereinheiten,
- L: mittlere Anzahl der linear gebundenen Monomereinheiten.

Dendrimere weisen im Allgemeinen einen Verzweigungsgrad DB von wenigstens 99 %, speziell 99,9 bis 100 %, auf.

Hyperverzweigte Polymere weisen vorzugsweise einen Verzweigungsgrad DB von 10 bis 95 %, bevorzugt 25 bis 90 % und insbesondere 30 bis 80 %, auf.

Zur Erzielung vorteilhafter anwendungstechnischer Eigenschaften können sowohl die strukturell und molekular einheitlichen Dendrimere wie auch hyperverzweigte Polymere eingesetzt werden. Hyperverzweigte Polymere sind jedoch in der Regel einfacher und somit wirtschaftlicher herstellbar als Dendrimere. So wird z. B. die Herstellung der monodispersen Dendrimere dadurch verkompliziert, dass bei jedem Verknüpfungsschritt Schutzgruppen eingeführt und wieder entfernt werden müssen und vor Beginn jeder neuen Wachstumsstufe intensive Reinigungsoperationen erforderlich sind, weshalb Dendrimere üblicherweise nur im Labormaßstab hergestellt werden können.

Bevorzugt handelt es sich bei den erfindungsgemäßen und erfindungsgemäß eingesetzten hochverzweigten Polycarbonaten um hyperverzweigte Polycarbonate.

Der Begriff Polycarbonat umfasst im Sinne der Erfindung auch Verbindungen, die neben Carbonatgruppen weitere funktionelle Gruppen aufweisen, wie Poly(estercarbonate), Poly(ethercarbonate), Poly(etherestercarbonate), etc. Erfindungswesentlich ist jedoch das Vorhandensein der Carbonatgruppe (-O-(C=O)-O- Gruppe).

Die erfindungsgemäßen und erfindungsgemäß verwendeten hochverzweigten Polycarbonate, die wenigstens einen C₈- bis C₃₂-Alkenylrest mit mindestens einer Kohlenstoff-Kohlenstoff-Doppelbindung umfassen, weisen vorzugsweise ein gewichtsmittleres Molekulargewicht M_{w} im Bereich von etwa 500 bis 100 000 g/mol, bevorzugt 750 bis 75 000 g/mol, insbesondere 1000 bis 50 000 g/mol auf. Die Molmassenbestimmung kann dabei per Gelpermeationschromatographie mit einem Standard, wie Polymethylmethacrylat, erfolgen.

Die Zugabe des hochverzweigten Polycarbonats kann vor und/oder während und/oder nach der radikalischen Emulsionspolymerisation zur Herstellung von Pd) erfolgen. Spezielle Ausführungen, auch im Hinblick auf die gezielte Beeinflussung bestimmter anwendungstechnischer Eigenschaften, sind im Folgenden beschrieben.

Im Rahmen der vorliegenden Erfindung umfasst der Ausdruck Alkyl geradkettige und verzweigte Alkylgruppen. Geeignete kurzkettige Alkylgruppen sind z. B. geradkettige oder verzweigte C₁-C₇Alkyl-, bevorzugt C₁-C₆-Alkyl- und besonders bevorzugt C₁-C₄-Alkylgruppen. Dazu zählen insbesondere Methyl, Ethyl, Propyl, Isopropyl, n-Butyl, 2-Butyl, sec.-Butyl, tert.-Butyl, n-Pentyl, 2-Pentyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 2-Hexyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 1-Ethylbutyl, 2-Ethylbutyl, 1-Ethyl- 2-methylpropyl, n-Heptyl, 2-Heptyl, 3-Heptyl, 2-Ethylpentyl, 1-Propylbutyl, etc.

Geeignete längerkettige C₈-C₃₂-Alkylgruppen sind geradkettige und verzweigte Alkylgruppen. Bevorzugt handelt es sich dabei um überwiegend lineare Alkylreste, wie sie auch in natürlichen oder synthetischen Fettsäuren und Fettalkoholen sowie Oxoalkoholen vorkommen. Dazu zählen z. B. n-Octyl, n-Nonyl, n-Decyl, n-Undecyl, n-Dodecyl, n-Tridecyl, n-Tetradecyl, n-Pentadecyl, n-Hexadecyl, n-Heptadecyl, n-Octadecyl, n-Nonadecyl etc. Der Ausdruck Alkyl umfasst unsubstituierte und substituierte Alkylreste.

Die vorstehenden Ausführungen zu Alkyl gelten auch für die Alkylteile in Arylalkyl. Bevorzugte Arylalkylreste sind Benzyl und Phenylethyl.

C₈-C₃₂-Alkenyl steht im Rahmen der vorliegenden Erfindung für geradkettige und verzweigte Alkenylgruppen, die einfach, zweifach oder mehrfach ungesättigt sein können. Vorzugsweise handelt es sich um C₁₀-C₂₀-Alkenyl. Der Ausdruck Alkenyl umfasst unsubstituierte und substituierte Alkenylreste. Speziell handelt es sich dabei um überwiegend lineare Alkenylreste, wie sie auch in natürlichen oder synthetischen Fettsäuren und Fettalkoholen sowie Oxoalkoholen vorkommen. Dazu zählen insbesondere Octenyl, Nonenyl, Decenyl, Undecenyl, Dodecenyl, Tridecenyl, Tetradecenyl, Pentadecenyl, Hexadecenyl, Heptadecenyl, Octadecenyl, Nonadecenyl, Linolyl, Linolenyl, Eleostearyl und Oleyl (9-Octadecenyl).

Der Ausdruck Alkylen im Sinne der vorliegenden Erfindung steht für geradkettige oder verzweigte Alkandiyl-Gruppen mit 1 bis 7 Kohlenstoffatomen, z. B. Methylen, 1,2-Ethylen, 1,3-Propylen, etc.

Cycloalkyl steht vorzugsweise für C₄-C₈-Cycloalkyl, wie Cyclobutyl, Cyclopentyl, Cyclohexyl, Cycloheptyl oder Cyclooctyl.

Der Ausdruck Aryl umfasst im Rahmen der vorliegenden Erfindung ein- oder mehrkernige aromatische Kohlenwasserstoffreste, die unsubstituiert oder substituiert sein können. Der Ausdruck Aryl steht vorzugsweise für Phenyl, Tolyl, Xylyl, Mesityl, Duryl, Naphthyl, Fluorenyl, Anthracenyl oder Phenanthrenyl, besonders bevorzugt für Phenyl oder Naphthyl, wobei diese Arylgruppen im Falle einer Substitution im Allgemeinen 1, 2, 3, 4 oder 5, vorzugsweise 1, 2 oder 3 Substituenten tragen können.

Herstellung der hochverzweigten Polycarbonate mit Alkenylresten für die Verwendung in der erfindungsgemäßen wässrigen Polymerdispersion Pd)

Bevorzugt zur Herstellung der hochverzweigten Polycarbonate, die wenigstens einen C₈- bis C₃₂-Alkenylrest mit mindestens einer Kohlenstoff-Kohlenstoff-Doppelbindung umfassen ist ein Verfahren, bei dem man wenigstens ein organisches Carbonat (A) mit wenigstens einem mindestens trifunktionellen Alkohol (B) und wenigstens einer Verbindung (C) umsetzt, wobei die Verbindung (C)
- einen C₈- bis C₃₂-Alkenylrest mit mindestens einer Kohlenstoff-Kohlenstoff-Doppelbindung und
- eine gegenüber Hydroxylgruppen oder Carbonatgruppen reaktive funktionelle Gruppe
aufweist. Dabei kann die Umsetzung mit (C) während und/oder nach der Umsetzung von (A) mit (B) erfolgen.

### Komponente (A)

Bevorzugte organischen Carbonate (A) haben die allgemeine Formel R^{a}OC(=O)OR^{b}, wobei R^{a} und R^{b} jeweils unabhängig voreinander ausgewählt sind unter geradkettigen oder verzweigten Alkyl-, Arylalkyl-, Cycloalkyl- und Arylresten, wobei R^{a} und R^{b} auch gemeinsam mit der Gruppe -OC(=O)O-, an die sie gebunden sind, für ein cyclisches Carbonat stehen können.

Die Reste R^{a} und R^{b} können gleiche oder verschiedene Bedeutungen aufweisen. In einer speziellen Ausführung weisen R^{a} und R^{b} gleiche Bedeutungen auf. Vorzugsweise sind R^{a} und R^{b} ausgewählt unter C₁-C₂₀-Alkyl, C₅-C₇-Cycloalkyl, C₆-C₁₀-Aryl und C₆-C₁₀-Aryl-C₁-C₂₀-alkyl, wie eingangs definiert. R^{a} und R^{b} können auch gemeinsam für C₂-C₆-Alkylen stehen. Besonders bevorzugt sind R^{a} und R^{b} ausgewählt unter geradkettigem und verzweigtem C₁-C₅-Alkyl, wie eingangs definiert.

Dialkyl- oder Diarylcarbonate (A) können z. B. hergestellt werden aus der Reaktion von aliphatischen, araliphatischen oder aromatischen Alkoholen, vorzugsweise Monoalkoholen mit Phosgen. Weiterhin können sie auch über oxidative Carbonylierung der Alkohole oder Phenole mittels CO in Gegenwart von Edelmetallen, Sauerstoff oder NOₓ hergestellt werden. Zu Herstellmethoden von Diaryl- oder Dialkylcarbonaten siehe auch "Ullmann's Encyclopedia of Industrial Chemistry", 6th Edition, 2000 Electronic Release, Verlag Wiley-VCH.

Beispiele geeigneter Carbonate (A) umfassen aliphatische oder aromatische Carbonate, wie Ethylencarbonat, 1,2- oder 1,3-Propylencarbonat, Diphenylcarbonat, Ditolylcarbonat, Dixylylcarbonat, Dinaphthylcarbonat, Ethylphenylcarbonat, Dibenzylcarbonat, Dimethylcarbonat, Diethylcarbonat, Dipropylcarbonat, Dibutylcarbonat, Diisobutylcarbonat, Dipentylcarbonat, Dihexylcarbonat, Dicyclohexylcarbonat, Diheptylcarbonat, Dioctylcarbonat, Didecylacarbonat und Didodecylcarbonat.

Bevorzugt werden aliphatische Carbonate (A) eingesetzt, insbesondere solche, bei denen die Reste 1 bis 5 C-Atome umfassen, wie z. B. Dimethylcarbonat, Diethylcarbonat, Dipropylcarbonat, Dibutylcarbonat oder Diisobutylcarbonat.

### Komponente (B)

Die organischen Carbonate werden mit mindestens einem aliphatischen, cycloaliphatischen oder aromatischen Alkohol (B), welcher mindestens drei OH-Gruppen aufweist oder Gemischen zweier oder mehrerer verschiedener Alkohole (B) umgesetzt.

Beispiele für Alkohole mit mindestens drei OH-Gruppen sind Glycerin, Trimethylolmethan, Trimethylolethan, Trimethylolpropan, 1,2,4-Butantriol, Tris(hydroxymethyl)amin, Tris(hydroxyethyl)amin, Tris(hydroxypropyl)amin, Pentaerythrit, Bis(trimethylolpropan), Di(pentaerythrit), Di- Tri- oder Oligoglycerine, oder Zucker, wie z. B. Glucose, tri- oder höherfunktionelle Polyetherole auf Basis tri- oder höherfunktioneller Alkohole und Ethylenoxid, Propylenoxid oder Butylenoxid. Dabei sind Glycerin, Trimethylolethan, Trimethylolpropan, 1,2,4-Butantriol, Pentaerythrit, sowie deren Polyetherole auf Basis von Ethylenoxid oder Propylenoxid, die mit 1 bis 20 mol Alkylenoxid pro mol mindestens trifunktionellem Alkohol umgesetzt sind, besonders bevorzugt.

Zur Herstellung der hochverzweigten Polycarbonate kann zusätzlich auch wenigstens ein von den zuvor beschriebenen Alkoholen (B) und den im Folgenden beschriebenen Alkoholen (C) verschiedener Alkohol B' eingesetzt werden. Die Alkohole B' sind ausgewählt aus monofunktionellen Alkoholen, difunktionellen Alkoholen und Mischungen davon. Geeignete monofunktionelle Alkohole umfassen C₄-C₂₀-Alkanole, wie n-Butanol, sec.-Butanol, tert.-Butanol, Cycloalkanole, wie Cyclohexanol, aromatische Alkohole, wie Phenol, monofunktionelle Polyetherole, und Mischungen davon. Geeignete difunktionelle Alkohole umfassen Ethylenglykol, Diethylenglykol, Triethylenglykol, 1,2- und 1,3-Propandiol, Dipropylenglykol, Tripropylenglykol, Neopentylglykol, 1,2-, 1,3- und 1,4-Butandiol, 1,2-, 1,3- und 1,5-Pentandiol, Hexandiol, Cyclopentandiol, Cyclohexandiol, Cyclohexandimethanol, difunktionelle Polyetherole, und Mischungen davon.

Bevorzugt ist die mittlere OH-Funktionalität aller eingesetzten Alkohole B und, falls vorhanden B', zusammen größer als 2.

### Komponente (C)

Die Verbindungen (C) weisen einen C₈- bis C₃₂-Alkenylrest mit mindestens einer Kohlenstoff-Kohlenstoff-Doppelbindung und einer gegenüber Hydroxylgruppen oder Carbonatgruppen reaktiven funktionellen Gruppe auf.

Die gegenüber Hydroxylgruppen reaktiven funktionellen Gruppen sind vorzugsweise ausgewählt unter Carbonsäuregruppen, Carbonsäureanhydriden, Carbonsäurehalogeniden und Carbonsäurestern. Bevorzugt als Halogenide sind die Chloride. Bevorzugt als Ester sind die Methylester, Ethylester, Mono-, Di- und Triglyceride sowie Gemische davon.

Die gegenüber Carbonatgruppen reaktiven funktionellen Gruppen sind vorzugsweise ausgewählt unter Hydroxylgruppen, Thioalkoholen und primären und/ oder sekundären Aminen.

Bevorzugte Verbindungen (C) sind C₈- bis C₃₂-Monocarbonsäuren mit mindestens einer Kohlenstoff-Kohlenstoff-Doppelbindung oder Derivate davon. Geeignete Derivate sind Anhydride, Halogenide und Ester. Bevorzugt als Halogenide sind die Chloride. Bevorzugt als Ester sind die Methylester, Ethylester, Mono-, Di- und Triglyceride sowie Gemische davon.

Die Monocarbonsäuren (C) können lineare, verzweigte, alicyclische oder aromatische Kohlenwasserstoffreste aufweisen. Bevorzugt sind lineare (unverzweigte) Monocarbonsäuren, die einen C₈- bis C₃₂-Alkenylrest mit mindestens einer Kohlenstoff-Kohlenstoff-Doppelbindung umfassen. Bevorzugt sind C₁₀- bis C₂₂-Monocarbonsäuren.

Besonders bevorzugt wird als Verbindung (C) wenigstens eine Monocarbonsäure eingesetzt, die wenigstens einen C₈- bis C₃₂-Alkenylrest mit mindestens zwei Kohlenstoff-Kohlenstoff-Doppelbindungen umfasst.

In einer speziellen Ausführungsform wird als Verbindung (C) wenigstens eine Monocarbonsäure eingesetzt, die mindestens einen C₈- bis C₃₂-Alkenylrest mit mindestens zwei isolierten (nicht konjugierten) Kohlenstoff-Kohlenstoff-Doppelbindungen umfasst.

Besonders bevorzugt befinden sich zumindest bei einem Teil der C₈- bis C₃₂-Alkenylreste die Doppelbindungen relativ zueinander in der 1,4-Position oder der 1,4,7-Position. D. h. die Alkenylreste leiten sich teilweise oder vollständig von Fettsäuren ab, die die Doppelbindungen relativ zueinander in der 1,4-Position oder der 1,4,7-Position aufweisen. Im Rahmen dieser Anmeldung wird mit 1,4-Position und 1,4,7-Position die relative Position der Doppelbindungen zueinander beschrieben. Man zählt von der Carboxygruppe aus. Das der Carboxygruppe am nächsten liegende Doppelbindungskohlenstoffatom der ersten Doppelbindung erhält die Zahl 1. Es folgt das der Carboxygruppe am nächsten liegende Doppelbindungskohlenstoffatom der zweiten Doppelbindung und, falls vorhanden, das der dritten. Alpha-Linolensäure (C₁₇H₂₉COOH) weist die Doppelbindungen in den absoluten Positionen 9, 12 und 15 auf und ist somit ein Beispiel für eine Monocarbonsäure mit Doppelbindungen in der 1,4,7-Position.

Dann kann zusätzlich mindestens eine weitere Monocarbonsäure (C) eingesetzt werden, die einen C₈- bis C₃₂-Alkenylrest mit mindestens zwei konjugierten Kohlenstoff-Kohlenstoff-Doppelbindungen umfasst. Somit lässt sich eine beschleunigte Härtung der erfindungsgemäßen hochverzweigten Polycarbonate bzw. von Beschichtungsmitteln, die wenigstens ein erfindungsgemäßes hochverzweigtes Polycarbonat enthalten, erzielen.

Bevorzugt als Monocarbonsäure (C) sind natürlich vorkommende Fettsäuren und Fettsäuregemische. Diese liegen in der Natur als Öle oder Fette in Form von Triglyceriden vor. Sie können zur Herstellung der erfindungsgemäßen Polycarbonate in Form der freien Fettsäure oder eines Derivats, speziell in Form eines Mono-, Di- oder Triglycerids, eingesetzt werden.

Bevorzugt ist die Monocarbonsäure (C) ausgewählt unter Palmitoleinsäure, Ölsäure, Linolsäure, Linolensäure, Elaostearinsäure, Fettsäuren aus Leinöl, Fettsäuren aus Sojaöl, Fettsäuren aus Baumwollsaatöl, Fettsäuren aus Sonnenblumenöl, Fettsäuren aus Safloröl, Fettsäuren aus Rizinusöl, Fettsäuren aus Fischöl, Fettsäuren aus Kokosfett, Fettsäuren aus Palmkernöl, Fettsäuren aus Rapsöl, Fettsäuren aus Oiticicaöl, Fettsäuren aus Holzöl (Tungöl), Fettsäuren aus Ricinenöl, Fettsäuren aus Tallöl, Fettsäuren aus Mohnöl, Fettsäuren aus Nussöl, Fettsäuren aus Hanföl und Derivaten und Mischungen davon. Geeignete Derivate sind Anhydride, Halogenide, die Mono-, Di- und speziell Triglyceride.

Bevorzugte Monocarbonsäurederivate (C) sind Leinöl, Sojaöl, Baumwollsaatöl, Sonnenblumenöl, Safloröl, Rizinusöl, Fischöl, Kokosfett, Palmkernöl, Rapsöl, Oiticicaöl, Holzöl (Tungöl), Ricinenöl, Tallöl, Mohnöl, Nussöl, Hanföl und Mischungen davon.

Zur Herstellung der erfindungsgemäßen Polycarbonate werden die Monocarbonsäuren (C) oder deren Anhydride, Halogenide oder Ester mit einwertigen Alkoholen vorzugsweise in einer Menge von 10 bis 100 Mol-%, besonders bevorzugt 30 bis 100 Mol-%, insbesondere 50 bis100 Mol-%, bezogen auf Mol OH-Gruppen der hydroxylgruppenhaltigen, hochverzweigten Ausgangspolycarbonate (P) eingesetzt.

Zur Herstellung der erfindungsgemäßen Polycarbonate werden die Monocarbonsäurediglyceride (C) vorzugsweise in einer Menge von 5 bis 50 Mol-%, besonders bevorzugt 15 bis 50 Mol-%, insbesondere 25 bis 50 Mol-%, bezogen auf Mol OH-Gruppen der hydroxylgruppenhaltigen, hochverzweigten Ausgangspolycarbonate (P) eingesetzt.

Zur Herstellung der erfindungsgemäßen Polycarbonate werden die Monocarbonsäuretriglyceride vorzugsweise in einer Menge von 3,4 bis 33 Mol-%, besonders bevorzugt 10 bis 33 Mol-%, insbesondere 16,7 bis 33 Mol-%, bezogen auf Mol OH-Gruppen der hydroxylgruppenhaltigen, hochverzweigten Ausgangspolycarbonate (P) eingesetzt.

Weitere bevorzugte Verbindungen (C) sind C₈- bis C₃₂-Monoalkohole mit mindestens einer Kohlenstoff-Kohlenstoff-Doppelbindung. Besonders bevorzugt wird als Verbindung (C) dann wenigstens ein Monoalkohol eingesetzt, der wenigstens einen C₈- bis C₃₂-Alkenylrest mit mindestens zwei Kohlenstoff-Kohlenstoff-Doppelbindungen umfasst. In einer speziellen Ausführungsform wird als Verbindung (C) wenigstens ein Monoalkohol eingesetzt, der mindestens einen C₈- bis C₃₂-Alkenylrest mit mindestens zwei isolierten (nicht konjugierten) Kohlenstoff-Kohlenstoff-Doppelbindungen umfasst. Besonders bevorzugt befinden sich zumindest bei einem Teil der C₈- bis C₃₂-Alkenylreste die Doppelbindungen relativ zueinander in der 1,4-Position oder der 1,4,7-Position. Dann kann zusätzlich mindestens ein weiterer Monoalkohol (C) eingesetzt werden, der einen C₈- bis C₃₂-Alkenylrest mit mindestens zwei konjugierten Kohlenstoff-Kohlenstoff-Doppelbindungen umfasst. Somit lässt sich eine beschleunigte Härtung der erfindungsgemäßen hochverzweigten Polycarbonate bzw. von Beschichtungsmitteln, die wenigstens ein erfindungsgemäßes hochverzweigtes Polycarbonat enthalten, erzielen.

Bevorzugt als Monoalkohole (C) sind solche, die durch Reduktion der Carboxylgruppen natürlich vorkommender Fettsäuren und Fettsäuregemische erhältlich sich. Auf die zuvor bei den Monocarbonsäuren (C) genannten Fettsäuren und Fettsäuregemische wird diesbezüglich in vollem Umfang Bezug genommen. Ungesättigte Fettalkohole sind weit verbreitete Tenside und kommerziell erhältlich. Ihre Herstellung erfolgt z. B. ausgehend von ungesättigten Fettsäureestern, speziell den Fettsäuremethylestern. Diese können aus den Triglyceriden auf übliche Weise, z. B. durch Druckspaltung in Glycerin und Fettsäuren und anschließende Veresterung mit Methanol erhalten werden. Die so erhaltenen Methylester können beispielsweise in Gegenwart chrom- oder zinkhaltiger Mischkatalysatoren selektiv hydriert werden (Ullmann's Encyclopedia of Industrial Chemistry, Verlag Chemie, Weinheim, 5. ed. on CD-ROM (1997), "Fatty Alcohols, 3. Unsaturated Fatty Alcohols"). Alternativ gelingt auch die selektive Reduktion der Carboxylgruppen mit Natrium nach Bouveault und Blanc.

Als Komponente (C) bevorzugte ungesättigte Fettalkohole sind ausgewählt unter Palmoleylalkohol, Oleylalkohol, Elaidylalkohol, Petroselinylalkohol, Linolylalkohol, Linolenylalkohol, Ricinolalkohol, 12-Hydroxystearylalkohol, Gadoleylalkohol, Erucylalkohol und Mischungen davon. In der Praxis ist es auch möglich, statt der reinen ungesättigten Fettalkohole technische Gemische mit gesättigten Homologen einsetzen. Diese "überwiegend ungesättigten" Fettalkohole weisen z. B. eine Iodzahl im Bereich von 50 bis 150 auf. Dabei ist der Begriff "überwiegend ungesättigt" so zu verstehen, dass mindestens 50 Mol-% des Fettalkoholgemisches ungesättigte Homologe sind. Geeignet ist auch der Einsatz von Fettalkoholgemischen mit einem Gehalt an ungesättigten Fettalkoholen von weniger als 50 Mol-%, wie z. B. in einem Bereich von 10 bis 49,9 Mol-%. Dabei resultieren dann so genannte "halbtrocknende Systeme".

Weitere bevorzugte Verbindungen (C) sind C₈- bis C₃₂-Monoamine mit mindestens einer Kohlenstoff-Kohlenstoff-Doppelbindung. Besonders bevorzugt wird als Verbindung (C) dann wenigstens ein Monoamin eingesetzt, das wenigstens einen C₈- bis C₃₂-Alkenylrest mit mindestens zwei Kohlenstoff-Kohlenstoff-Doppelbindungen umfasst. In einer speziellen Ausführungsform wird als Verbindung (C) wenigstens ein Monoamin eingesetzt, das mindestens einen C₈- bis C₃₂-Alkenylrest mit mindestens zwei isolierten (nicht konjugierten) Kohlenstoff-Kohlenstoff-Doppelbindungen umfasst. Besonders bevorzugt befinden sich zumindest bei einem Teil der C₈- bis C₃₂-Alkenylreste die Doppelbindungen relativ zueinander in der 1,4-Position oder der 1,4,7-Position. Dann kann zusätzlich mindestens ein weiteres Monoamin (C) eingesetzt werden, das einen C₈- bis C₃₂-Alkenylrest mit mindestens zwei konjugierten Kohlenstoff-Kohlenstoff-Doppelbindungen umfasst. Somit lässt sich eine beschleunigte Härtung der erfindungsgemäßen hochverzweigten Polycarbonate bzw. von Beschichtungsmitteln, die wenigstens ein erfindungsgemäßes hochverzweigtes Polycarbonat enthalten, erzielen.

Bevorzugt als Monoamine (C) sind solche, die aus den entsprechenden natürlich vorkommenden Fettsäuren und Fettsäuregemischen erhältlich sich. Auf die zuvor bei den Monocarbonsäuren (C) genannten Fettsäuren und Fettsäuregemische wird diesbezüglich in vollem Umfang Bezug genommen. Ungesättigte Fettamine sind kommerziell erhältlich. Ihre Herstellung erfolgt z. B. ausgehend von ungesättigten Carbonsäurenitrilen durch Reduktion an einem geeigneten Katalysator. Carbonsäurenitrile werden aus Carbonsäuren und Ammoniak in Gegenwart von Hydrierkatalysatoren gewonnen. Die US 4,234,509 beschreibt ein Verfahren zur Herstellung von Fettsäurenitrilen und Glycerin aus den entsprechenden Triglyceriden, speziell aus natürlichen Ölen und Fetten. Die selektive Reduktion der Nitrilgruppe der ungesättigten Nitrile gelingt z. B. nach dem in der US 4,845,298 beschriebenen Verfahren durch Umsetzung mit Wasserstoff in Gegenwart eines Nickelkatalysators und eines Carbonsäureamids.

Als Komponente (C) bevorzugte ungesättigte Fettamine sind ausgewählt unter Palmoleylamin, Oleylamin, Elaidylamin, Petroselinylamin, Linolylamin, Linolenylamin, Ricinolamin, 12-Hydroxystearylamin, Gadoleylamin, Erucylamin und Mischungen davon. In der Praxis ist es auch möglich, statt der reinen ungesättigten Fettamine technische Gemische mit gesättigten Homologen einsetzen.

Bevorzugt ist ein Verfahren zur Herstellung eines hochverzweigten Polycarbonats für die Verwendung in einer erfindungsgemäßen Polymerdispersion Pd), das wenigstens einen C₈- bis C₃₂-Alkenylrest mit mindestens einer Kohlenstoff-Kohlenstoff-Doppelbindung umfasst, bei dem man
a) wenigstens ein organisches Carbonat (A) mit wenigstens einem mindestens trifunktionellen Alkohol (B) unter Eliminierung von Alkoholen zu einem Kondensationsprodukt (K) umsetzt,
b) das Kondensationsprodukt (K) weiter unter Eliminierung von Alkoholen zu einem hochverzweigten Polycarbonat (P) umsetzt, wobei zumindest ein Teil der eliminierten Alkohole aus dem Reaktionsgemisch entfernt wird,
wobei zur Umsetzung in Schritt b) zusätzlich wenigstens eine Verbindung (C) eingesetzt wird, die einen C₈- bis C₃₂-Alkenylrest mit mindestens einer Kohlenstoff-Kohlenstoff-Doppelbindung und die eine gegenüber Hydroxylgruppen oder Carbonatgruppen reaktive funktionelle Gruppe aufweist und/oder das hochverzweigte Polycarbonat (P) im Anschluss an Schritt b) mit wenigstens einer Verbindung (C) umgesetzt wird.

Die Schritte a) und b) werden bevorzugt als Eintopfsynthese, d. h. ohne Isolierung des Kondensationsprodukts (K) durchgeführt.

Zur Umsetzung in Schritt b) können noch andere, von den Verbindungen B) und C) verschiedene mono- und oder difunktionelle Alkohole eingesetzt werden (mit B' bezeichnet).

Die Reaktion des Carbonats (A) mit wenigstens einem Alkohol (B) und, falls vorhanden B', erfolgt im Sinne einer Umesterung. Dabei wird mit jedem Kondensationsschritt ein den Alkoxyresten der eingesetzten organischen Carbonate (A) der Formel R-OC(=O)OR^{b} entsprechender Alkohol R^{a}-OH oder R^{b}-OH erhalten. Falls die freigesetzten Alkohole abdestilliert werden sollen, ist es vorteilhaft, Carbonate (A) einzusetzen, die bei der Umsetzung Alkohole R^{a}-OH oder R^{b}-OH mit einem Siedepunkt von weniger als 140 °C freisetzen.

Nach dem zuvor beschriebenen Verfahren werden durch Reaktion des Carbonats (A) mit wenigstens einem Alkohol (B) und, falls vorhanden B', hochverzweigte Polycarbonate (P) gebildet, die (ohne Umsetzung mit einer Verbindung (C)) Carbonatgruppen und gegebenenfalls wenigstens eine alkoholische Hydroxylgruppen oder Hydroxylgruppen und gegebenenfalls wenigstens eine organische Carbonatgruppe, aufweisen. Die Modifizierung der hochverzweigten Polycarbonate mit C₈- bis C₃₂-Alkenylresten mit mindestens einer Kohlenstoff-Kohlenstoff-Doppelbindung erfolgt durch Umsetzung mit wenigstens einer Verbindung (C).

In einer speziellen Ausführung des erfindungsgemäßen Verfahrens werden durch Reaktion des Carbonats (A) mit wenigstens einem Alkohol (B) und, falls vorhanden B', hochverzweigte Polycarbonate (P) gebildet, die wenigstens eine alkoholische Hydroxylgruppe aufweisen. Diese werden dann anschließend einer weiteren Umsetzung mit einer Verbindung (C) unterzogen, die ausgewählt ist unter C₈- bis C₃₂-Monocarbonsäuren mit mindestens einer Kohlenstoff-Kohlenstoff-Doppelbindung oder einem Derivat davon.

Geeignete Verfahren zur Herstellung hydroxylgruppenhaltiger, hochverzweigter Polycarbonate (P) sind prinzipiell bekannt und beispielsweise in der WO 2005/026234 und in der WO 2006/089940 beschrieben, worauf hier in vollem Umfang Bezug genommen wird. Diese hochverzweigten Polycarbonate (P) weisen wenigstens eine alkoholische Hydroxylgruppe auf. Der Begriff "alkoholische Hydroxylgruppe" umfasst dabei auch an einen Aromaten gebundene OH-Gruppen. Vorzugsweise weisen die in Schritt b) erhältlichen Polycarbonate (P) wenigstens 4, besonders bevorzugt wenigstens 5, insbesondere wenigstens 6 alkoholische Hydroxylgruppen auf. Die maximale Anzahl Hydroxylgruppen ist in der Regel nicht kritisch. Sie beträgt jedoch vielfach nicht mehr als 200. Bevorzugt weisen die in Schritt a) bereitgestellten Polycarbonate 4 bis 100, speziell 5 bis 80, und spezieller 6 bis 50 alkoholische Hydroxylgruppen auf.

Die in Schritt b) erhältlichen hydroxylgruppenhaltigen, hochverzweigten Polycarbonate (P) weisen vorzugsweise eine OH-Zahl (bestimmt nach DIN 53240) von mindestens 20 mg KOH/g, besonders bevorzugt von mindestens 50 mg KOH/g Polymer und ganz besonders bevorzugt von mindestens 100 mg KOH/ g Polymer auf.

Die in Schritt b) bereitgestellten hydroxylgruppenhaltigen, hochverzweigten Polycarbonate (P) können neben den alkoholischen Hydroxylgruppen und den bei der Synthese resultierenden Carbonatgruppen weitere funktionelle Gruppen aufweisen. In einer speziellen Ausführungsform weisen die in Schritt b) bereitgestellten Polycarbonate (P) wenigstens 1, speziell wenigstens 2, spezieller wenigstens 4 weitere funktionelle Gruppen auf. Die maximale Anzahl dieser weiteren funktionellen Gruppen ist in der Regel nicht kritisch. Sie beträgt jedoch in der Regel nicht mehr als 200, speziell 1 bis 100, spezieller 2 bis 80, und noch spezieller 6 bis 50.

Die weiteren (optionalen) funktionellen Gruppen, die die in Schritt b) bereitgestellten hydroxylgruppenhaltigen, hochverzweigten Ausgangspolycarbonate aufweisen können, sind vorzugsweise unabhängig voneinander ausgewählt unter -COOH, -COOR^{x}, -CONH₂, -CONHR, -NH₂, -NHR oder -SO₃H mit R^{x} = H, Alkyl, Cycloalkyl oder Aryl.

### Schritte a) und b)

Die in Schritt a) erhaltenen nicht polymeren Kondensationsprodukte (K) werden bevorzugt nicht isoliert und reagieren erfindungsgemäß bevorzugt intermolekular unter Bildung von hochfunktionellen Polykondensationsprodukten (P), im Folgenden auch Polykondensationsprodukte (P) genannt.

Die Umsetzung in Schritt a) und in Schritt b) kann bei gleichen oder verschiedenen Temperaturen erfolgen. Beispielsweise kann die Temperatur in Schritt b) höher sein als im Schritt a), um eine Vervollständigung der Kondensationsreaktion zu erzielen. Möglich ist eine stufenweise oder sukzessive Temperaturänderung.

Die Umsetzung in Schritt a) erfolgt vorzugsweise bei einer Temperatur im Bereich von 0 bis 250 °C, besonders bevorzugt von 60 bis 200 °C.

Die Umsetzung in Schritt b) erfolgt vorzugsweise bei einer Temperatur im Bereich von 0 bis 250 °C, besonders bevorzugt von 60 bis 200 °C.

Die Umsetzung erfolgt vorzugsweise in Substanz oder in Lösung. Dies gilt im Allgemeinen für den Schritt a) und den Schritt b). Dabei können allgemein alle Lösungsmittel verwendet werden, die gegenüber den jeweiligen Edukten inert sind. Bevorzugt verwendet werden organische Lösungsmittel, wie z. B. Decan, Dodecan, Benzol, Toluol, Chlorbenzol, Xylol, Dimethylformamid, Dimethylacetamid oder Solvent Naphtha.

In einer bevorzugten Ausführungsform wird die Kondensationsreaktion in Substanz durchgeführt. Der bei der Reaktion freiwerdende aliphatische oder aromatische Alkohol (R^{a}-OH oder R^{b}-OH) kann zur Beschleunigung der Reaktion destillativ aus dem Reaktionsgemisch entfernt werden. Bevorzugt erfolgt die destillative Entfernung des Alkohols in Schritt b). Die Destillation kann gegebenenfalls bei vermindertem Druck erfolgen.

Die Umsetzung in Schritt b) erfolgt vorzugsweise in einem Druckbereich von 0,1 mbar bis 20 bar, besonders bevorzugt von 1 mbar bis 5 bar.

Die Umsetzungen in den Schritten a), b) und im Anschluss an Schritt b) kann in dafür üblichen Reaktoren oder Reaktorkaskaden durchgeführt werden. Die Umsetzungen können in batch-Fahrweise, semikontinuierlich oder kontinuierlich betrieben werden.

Zur Beschleunigung der Reaktion können auch Katalysatoren oder Katalysatorgemische zugegeben werden. Geeignete Katalysatoren sind Verbindungen, die Veresterungs- oder Umesterungsreaktionen katalysieren, z. B. Alkalihydroxide, Alkalicarbonate, Alkalihydrogencarbonate, vorzugsweise des Natriums, Kaliums oder Cäsiums, tertiäre Amine, Guanidine, Ammoniumverbindungen, Phosphoniumverbindungen, Aluminium-, Zinn-, Zink, Titan-, Zirkon- oder Wismut-organische Verbindungen, weiterhin so genannte Doppelmetallcyanid (DMC)-Katalysatoren, wie z. B. in der WO 03/029240, WO 03/029325 und WO 03/014186 beschrieben.

Vorzugsweise werden als Katalysatoren Kaliumhydroxid, Kaliumcarbonat, Kaliumhydrogencarbonat, Titantetrabutylat, Titantetraisopropylat, Dibutylzinnoxid, Dibutylzinndilaurat, Zinndioctoat, Zirkonacetylacetonat oder Gemische davon eingesetzt.

Die Zugabe des Katalysators erfolgt im Allgemeinen in einer Menge von 50 bis 10 000 Gew.-ppm, bevorzugt von 100 bis 5000 Gew.-ppm bezogen auf die Menge des eingesetzten Alkohols oder Alkoholgemisches.

Die in Schritt a), b) und im Anschluss an Schritt b) verwendeten Katalysatoren können dabei gleich oder verschieden sein.

Es ist möglich, sowohl durch Zugabe des geeigneten Katalysators als auch durch Wahl einer geeigneten Temperatur die intermolekulare Polykondensationsreaktion zu steuern.

Es ist weiterhin möglich, über die Zusammensetzung der Ausgangskomponenten und über die Reaktionsdauer und/oder den Reaktionsumsatz das mittlere Molekulargewicht des Polymeren (P) einstellen. Dabei kann zur Bestimmung des tatsächlichen Umsatzes z. B. der gebildete Alkohol kontinuierlich destillativ aus dem Reaktionsgemisch entfernt und die entfernte Alkoholmenge bestimmt werden. Bevorzugt wird die Reaktion in Schritt b) abgebrochen, nachdem 20 bis 90 %, vorzugsweise 30 bis 80 % der bei Vollumsatz erhaltenen Alkoholmenge aus dem Reaktionsgemisch entfernt wurden.

Zum Abbruch der intermolekularen Polykondensationsreaktion gibt es verschiedene Möglichkeiten. Beispielsweise kann die Temperatur auf einen Bereich abgesenkt werden, in dem die Reaktion zum Stillstand kommt und das Produkt (K) oder das hochverzweigte Ausgangspolycarbonat lagerstabil ist. Wie zuvor beschrieben, kann das so bereitgestellte hydroxylgruppenhaltige, hochverzweigte Ausgangspolycarbonat gewünschtenfalls vor der weiteren Umsetzung im Anschluss an Schritt b) isoliert und einer Aufarbeitung und/oder einer Reinigung unterzogen werden. Bevorzugt wird das nach Abbruch der Reaktion erhaltene Reaktionsgemisch ohne Isolierung zur weiteren Umsetzung im Anschluss an Schritt b) eingesetzt. Die Schritte a), b) und im Anschluss an Schritt b) werden dann bevorzugt im Sinne einer Eintopfreaktion durchgeführt. Dazu wird zu dem abgekühlten Reaktionsgemisch wenigstens eine C₈- bis C₃₂-Monocarbonsäure mit mindestens einer Kohlenstoff-Kohlenstoff-Doppelbindung gegeben und die weitere Umsetzung durchgeführt.

Die Kondensationsprodukte (K) bzw. hochverzweigten Polycarbonate (P), die bei erhöhter Temperatur hergestellt wurden, sind bei Raumtemperatur üblicherweise über einen längeren Zeitraum stabil. Die nach dem zuvor beschriebenen Verfahren bereitgestellten hydroxylgruppenhaltigen, hochverzweigten Polycarbonate (P) (Schritt b)) können daher gewünschtenfalls vor der anschließenden weiteren Umsetzung isoliert und einer Aufarbeitung und/oder einer Reinigung nach üblichen, dem Fachmann bekannten Verfahren unterzogen werden. In der Regel können die in dem Reaktionsgemisch der Umsetzung zwischen Carbonat (A) und Alkohol (B) (und gegebenenfalls weiteren Komponenten) enthaltenen hydroxylgruppenhaltigen, hochverzweigten Polycarbonate (P) ohne Isolierung zur weiteren Umsetzung für die Einführung der Alkenylreste eingesetzt werden. Die Schritte a), b) und im Anschluss an Schritt b) können nach einer bevorzugten Ausführung im Sinne einer Eintopfreaktion durchgeführt werden.

Aufgrund der Beschaffenheit der Kondensationsprodukte (K) ist es möglich, dass aus der Kondensationsreaktion Polykondensationsprodukte (P) (d. h. hydroxylgruppenhaltige, hochverzweigte Polycarbonate) mit unterschiedlichen Strukturen resultieren können, die Verzweigungen, aber keine Vernetzungen aufweisen. Die Anzahl der Hydroxylgruppen der Polykondensationsprodukte (P) ergibt sich dabei aus der Beschaffenheit der eingesetzten Kondensationsprodukte (K) und dem Polykondensationsgrad.

Die Herstellung der erfindungsgemäßen Polycarbonate in Schritt b) kann durch Veresterung in an sich bekannter Weise erfolgen. Geeignete Verfahren sind z. B. in Ullmann's Enzyklopädie der technischen Chemie, Verlag Chemie Weinheim, 4. Auflage (1980), Band 19, Seiten 61 ff. oder in H. Wagner und H. F. Sarx, "Lackkunstharze", Carl Hanser Verlag, München (1971), Seiten 86 - 152, ausführlich beschrieben.

Die Umsetzung in Schritt b) erfolgt vorzugsweise in Gegenwart eines Inertgases, z. B. Stickstoff, Helium oder Argon.

Die Umsetzung im Anschluss an Schritt b) kann gegebenenfalls in Gegenwart einer katalytischen Menge eines üblichen Veresterungskatalysators erfolgen. Dazu zählen z. B. Säuren, Basen, Salze davon oder Übergangsmetallverbindungen. Geeignete Veresterungskatalysatoren sind die zuvor genannten, worauf hier in vollem Umfang Bezug genommen wird. Geeignet als Veresterungskatalysatoren sind auch Phosphor(I)-Verbindungen, wie Phosphinsäure (unterphosphorige Säure) oder Salze der Phosphor(I)-säure (Phosphinate, Hypophosphite). Geeignet als Veresterungskatalysatoren sind weiterhin Titanate, bevorzugt Tetraalkylorthotitanate, insbesondere Tetraisopropyltitanat und Tetrabutyltitanat.

Die Katalysatormenge für die Umsetzung im Anschluss an Schritt b) beträgt im Allgemeinen 50 bis 10 000 Gew.-ppm, bevorzugt von 100 bis 5000 Gew.-ppm, bezogen auf die Gesamtmenge des eingesetzten Polycarbonats und der Monocarbonsäure.

Die Umsetzung im Anschluss an Schritt b) erfolgt vorzugsweise bei einer Temperatur im Bereich von etwa 100 bis 300 °C, besonders bevorzugt im Bereich von 120 bis 260 °C.

Die Umsetzung im Anschluss an Schritt b) kann auch unter kontinuierlicher oder stufenweiser Erhöhung der Temperatur erfolgt.

Vorzugsweise wird das bei der Umsetzung im Anschluss an Schritt b) gebildete niedermolekulare Kondensationsprodukt (Wasser oder bei Umesterung Alkohol) kontinuierlich aus dem Reaktionsgemisch entfernt. Die Entfernung des niedermolekularen Kondensationsprodukts erfolgt vorzugsweise destillativ. Zusätzlich kann ein Schleppmittel, wie Toluol oder Xylol, eingesetzt werden.

Die Steuerung der Hydroxylzahl und der Säurezahl der erfindungsgemäßen Polycarbonate kann über die Art der eingesetzten Edukte (speziell ihre Hydroxyl- und Carbonsäureäquivalente), die Stöchiometrie der eingesetzten Edukte und/oder die Reaktionsdauer der Veresterung erfolgen. So wird in der Regel die Polykondensation so lange unter analytischer Kontrolle durchgeführt, bis die angestrebten Werte für die Hydroxyl- und Säurezahl erreicht sind. Das Molekulargewicht der erfindungsgemäßen Polycarbonate kann analytisch, z. B. mittels GPC, bestimmt werden.

Gegenstand der Erfindung sind auch die nach dem zuvor beschriebenen Verfahren erhältlichen Polycarbonate.

Die erfindungsgemäßen und erfindungsgemäß verwendeten hochverzweigten Polycarbonate weisen vorzugsweise ein zahlenmittleres Molekulargewicht Mn im Bereich von 700 bis 50 000 g/mol auf.

Die erfindungsgemäßen und erfindungsgemäß verwendeten hochverzweigten Polycarbonate weisen vorzugsweise ein gewichtsmittleres Molekulargewicht Mw im Bereich von 1000 bis 100 000 g/mol auf.

Die erfindungsgemäßen und erfindungsgemäß verwendeten hochverzweigten Polycarbonate weisen vorzugsweise eine Säurezahl (bestimmt nach DIN 53402, ISO 2114) im Bereich von 0 bis 100 mg KOH/g Polymer, besonders bevorzugt von 0 bis 50 mg KOH/g Polymer, auf.

Die erfindungsgemäßen und erfindungsgemäß verwendeten hochverzweigten Polycarbonate weisen vorzugsweise eine OH-Zahl (bestimmt nach DIN 53240) im Bereich von mindestens 20 mg KOH/g Polymer, bevorzugt mindestens 50 und besonders bevorzugt mindestens 100 mg KOH/g Polymer, auf.

In einer weiteren Ausführungsform können die erfindungsgemäßen und erfindungsgemäß verwendeten hochverzweigten Polycarbonate neben den bereits durch die Reaktion erhaltenden funktionellen Gruppen weitere funktionelle Gruppen enthalten. Die Funktionalisierung kann dabei in Schritt b), während einer an Schritt b) anschließenden Umsetzung mit einer Komponente (C) oder im Anschluss daran erfolgen.

Gibt man vor oder während des Schritts b) Komponenten zu, die neben Hydroxyl- oder Carbonatgruppen weitere funktionelle Gruppen oder funktionelle Elemente besitzen, so erhält man ein Polycarbonat-Polymer mit statistisch verteilten von den Carbonat- oder Hydroxylgruppen verschiedenen Funktionalitäten.

Derartige Effekte lassen sich z. B. durch Zusatz von Verbindungen während der Polykondensation erzielen, die neben Hydroxylgruppen oder Carbonatgruppen weitere funktionelle Gruppen oder funktionelle Elemente, wie Mercaptogruppen, primäre, sekundäre oder tertiäre Aminogruppen, Ethergruppen, Derivate von Carbonsäuren, Derivate von Sulfonsäuren, Derivate von Phosphonsäuren, Arylreste oder langkettige Alkylreste tragen. Zur Modifikation mittels Carbamatgruppen lassen sich beispielsweise Ethanolamin, Propanolamin, Isopropanolamin, 2-(Butylamino)ethanol, 2-(Cyclohexylamino)ethanol, 2-Amino-1-butanol, 2-(2'-Amino-ethoxy)ethanol oder höhere Alkoxylierungsprodukte des Ammoniaks, 4-Hydroxypiperidin, 1-Hydroxyethylpiperazin, Diethanolamin, Dipropanolamin, Diisopropanolamin, Tris(hydroxymethyl)aminomethan, Tris(hydroxyethyl)aminomethan, Ethylendiamin, Propylendiamin, Hexamethylendiamin oder Isophorondiamin verwenden.

Für die Modifikation mit Mercaptogruppen lässt sich z. B. Mercaptoethanol oder Thioglycerin einsetzten. Tertiäre Aminogruppen lassen sich z. B. durch Einbau von N-Methyldiethanolamin, N-Methyldipropanolamin oder N,N-Dimethylethanolamin erzeugen. Ethergruppen können z. B. durch Einkondensation von di- oder höherfunktionellen Polyetherolen generiert werden. Durch Reaktion mit langkettigen Alkandiolen lassen sich langkettige Alkylreste einbringen, die Reaktion mit Alkyl- oder Aryldiisocyanaten generiert Alkyl-, Aryl- und Urethangruppen aufweisende Polycarbonate.

Eine nachträgliche Funktionalisierung kann man erhalten, indem das in Schritt b) oder im Anschluss an Schritt b) erhaltene hochverzweigten Polycarbonat mit einem geeigneten Funktionalisierungsreagenz, welches mit den OH- und/oder Carbonatgruppen des Polycarbonates reagieren kann, umsetzt. Dabei gilt jedoch immer die Maßgabe, dass die erfindungsgemäßen hochverzweigten Polycarbonate wenigstens einen C₈- bis C₃₂-Alkenylrest mit mindestens einer Kohlenstoff-Kohlenstoff-Doppelbindung, wie zuvor definiert, umfassen.

Die Hydroxylgruppen können z. B. durch Zugabe von Säuregruppen- oder Isocyanatgruppen enthaltenden Molekülen (die sich von den in Schritt b) eingesetzten C₈- bis C₃₂-Monocarbonsäure mit mindestens einer Kohlenstoff-Kohlenstoff-Doppelbindung oder deren Derivaten unterscheiden) modifiziert werden. Beispielsweise lassen sich Säuregruppen enthaltende Polycarbonate durch Umsetzung mit cyclischen Anhydriden erhalten.

Weiterhin können Hydroxylgruppen enthaltende hochfunktionelle Polycarbonate auch durch Umsetzung mit Alkylenoxiden, z. B. Ethylenoxid, Propylenoxid oder Butylenoxid, in hochfunktionelle Polycarbonat-Polyetherpolyole überführt werden.

### Polymerdispersion Pd)

Gegenstand der Erfindung ist, wie zuvor ausgeführt, eine wässrige Polymerdispersion Pd), die ein Emulsionspolymerisat wenigstens eines α,β-ethylenisch ungesättigten Monomers M) und wenigstens ein hochverzweigtes Polycarbonat umfasst, das wenigstens einen C₈- bis C₃₂-Alkenylrest mit mindestens einer Kohlenstoff-Kohlenstoff-Doppelbindung umfasst. Bezüglich geeigneter und bevorzugter hochverzweigter Polycarbonate wird auf die vorherigen Ausführungen in vollem Umfang Bezug genommen.

Vorzugsweise enthält die wässrige Polymerdispersion Pd) wenigstens ein erfindungsgemäßes hochverzweigtes Polycarbonat in einer Menge von 0,1 bis 30 Gew.-%, besonders bevorzugt von 0,5 bis 20 Gew.-%, insbesondere von 1,0 bis 10 Gew.-%, bezogen auf den Gesamtfeststoffgehalt der wässrige Polymerdispersion Pd) (d. h. x % erfindungsgemäßes hochverzweigtes Polycarbonat auf y % nicht-flüchtige Anteile der Polymerdispersion Pd), wobei x + y = 100 ist).

Zur Herstellung der Polymerdispersion Pd) wird wenigstens ein α,β-ethylenisch ungesättigtes Monomers M) eingesetzt, das vorzugsweise ausgewählt ist unter Estern α,β-ethylenisch ungesättigter Mono- und Dicarbonsäuren mit C₁-C₂₀-Alkanolen, Vinylaromaten, Estern von Vinylalkohol mit C₁-C₃₀-Monocarbonsäuren, ethylenisch ungesättigten Nitrilen, Vinylhalogeniden, Vinylidenhalogeniden, monoethylenisch ungesättigten Carbon- und Sulfonsäuren, phosphorhaltigen Monomeren, Estern α,β-ethylenisch ungesättigter Mono- und Dicarbonsäuren mit C₂-C₃₀-Alkandiolen, Amiden α,β-ethylenisch ungesättigter Mono- und Dicarbonsäuren mit C₂-C₃₀-Aminoalkoholen, die eine primäre oder sekundäre Aminogruppe aufweisen, primären Amiden α,β-ethylenisch ungesättigter Monocarbonsäuren und deren N-Alkyl- und N,N-Dialkylderivaten, N-Vinyllactamen, offenkettigen N-Vinylamidverbindungen, Estern von Allylalkohol mit C₁-C₃₀-Monocarbonsäuren, Estern von α,β-ethylenisch ungesättigten Mono- und Dicarbonsäuren mit Aminoalkoholen, Amiden α,β-ethylenisch ungesättigten Mono- und Dicarbonsäuren mit Diaminen, welche mindestens eine primäre oder sekundäre Aminogruppe aufweisen, N,N-Diallylaminen, N,N-Diallyl-N-alkylaminen, vinyl- und allylsubstituierten Stickstoffheterocyclen, Vinylethern, C₂-C₈-Monoolefinen, nicht aromatischen Kohlenwasserstoffen mit mindestens zwei konjugierten Doppelbindungen, Polyether(meth)acrylaten, Harnstoffgruppen aufweisenden Monomeren und Mischungen davon.

Geeignete Ester α,β-ethylenisch ungesättigter Mono- und Dicarbonsäuren mit C₁-C₂₀-Alkanolen sind Methyl(meth)acrylat, Methylethacrylat, Ethyl(meth)acrylat, Ethylethacrylat, n-Propyl(meth)acrylat, Isopropyl(meth)acrylat, n-Butyl(meth)acrylat, sec.-Butyl(meth)acrylat, tert.-Butyl(meth)acrylat, tert.-Butylethacrylat, n-Hexyl(meth)acrylat, n-Heptyl(meth)acrylat, n-Octyl(meth)acrylat, 1,1,3,3-Tetramethylbutyl(meth)acrylat, Ethylhexyl(meth)acrylat, n-Nonyl(meth)acrylat, n-Decyl(meth)acrylat, n-Undecyl(meth)acrylat, Tridecyl(meth)acrylat, Myristyl(meth)acrylat, Pentadecyl(meth)acrylat, Palmityl(meth)acrylat, Heptadecyl(meth)acrylat, Nonadecyl(meth)acrylat, Arachinyl(meth)acrylat, Behenyl(meth)acrylat, Lignoceryl(meth)acrylat, Cerotinyl(meth)acrylat, Melissinyl(meth)acrylat, Palmitoleinyl(meth)acrylat, Oleyl(meth)acrylat, Linolyl(meth)acrylat, Linolenyl(meth)acrylat, Stearyl(meth)acrylat, Lauryl(meth)acrylat und Mischungen davon.

Bevorzugt als Vinylaromaten sind Styrol, 2-Methylstyrol, 4-Methylstyrol, 2-(n-Butyl)styrol, 4-(n-Butyl)styrol, 4-(n-Decyl)styrol und besonders bevorzugt Styrol.

Geeignete Ester von Vinylalkohol mit C₁-C₃₀-Monocarbonsäuren sind z. B. Vinylformiat, Vinylacetat, Vinylpropionat, Vinylbutyrat, Vinyllaurat, Vinylstearat, Vinylpropionat, Versaticsäurevinylester und Mischungen davon.

Geeignete ethylenisch ungesättigte Nitrile sind Acrylnitril, Methacrylnitril und Mischungen davon.

Geeignete Vinylhalogenide und Vinylidenhalogenide sind Vinylchlorid, Vinylidenchlorid, Vinylfluorid, Vinylidenfluorid und Mischungen davon.

Geeignete ethylenisch ungesättigte Carbonsäuren und Sulfonsäuren oder deren Derivate sind Acrylsäure, Methacrylsäure, Ethacrylsäure, α-Chloracrylsäure, Crotonsäure, Maleinsäure, Maleinsäureanhydrid, Itaconsäure, Citraconsäure, Mesaconsäure, Glutaconsäure, Aconitsäure, Fumarsäure, die Halbester von monoethylenisch ungesättigten Dicarbonsäuren mit 4 bis 10, vorzugsweise 4 bis 6 C-Atomen, z. B. Maleinsäuremonomethylester, Vinylsulfonsäure, Allylsulfonsäure, Sulfoethylacrylat, Sulfoethylmethacrylat, Sulfopropylacrylat, Sulfopropylmethacrylat, 2-Hydroxy-3-acryloxypropylsulfonsäure, 2-Hydroxy-3-methacryloxypropylsulfonsäure, Styrolsulfonsäure und 2-Acrylamido-2-methylpropansulfonsäure. Bevorzugt sind z. B. Styrolsulfonsäuren, wie Styrol-4-sulfonsäure und Styrol-3-sulfonsäure und die Erdalkali- oder Alkalimetallsalze davon, z. B. Natrium-styrol-3-sulfonat und Natrium-styrol-4-sulfonat. Besonders bevorzugt sind Acrylsäure, Methacrylsäure und Mischungen davon.

Beispiele für phosphorhaltige Monomere sind z. B. Vinylphosphonsäure und Allylphosphonsäure. Geeignet sind weiter die Mono- und Diester der Phosphonsäure und Phosphorsäure mit Hydroxyalkyl(meth)acrylaten, speziell die Monoester. Geeignet sind weiter Diester der Phosphonsäure und Phosphorsäure die einfach mit einem Hydroxyalkyl(meth)acrylat und zusätzlich einfach mit einem davon verschiedenen Alkohol, z. B. einem Alkanol, verestert sind. Geeignete Hydroxyalkyl(meth)acrylate für diese Ester sind die im Folgenden als separate Monomere genannten, insbesondere 2-Hydroxyethyl(meth)acrylat, 3-Hydroxypropyl(meth)acrylat, 4-Hydroxybutyl(meth)acrylat, etc. Entsprechende Dihydrogenphosphatestermonomere umfassen Phosphoalkyl(meth)acrylate, wie 2-Phosphoethyl(meth)acrylat, 2-Phosphopropyl(meth)acrylat, 3-Phosphopropyl(meth)acrylat, Phosphobutyl(meth)-acrylat und 3-Phospho-2-hydroxypropyl(meth)acrylat. Geeignet sind auch die Ester der Phosphonsäure und Phosphorsäure mit alkoxilierten Hydroxyalkyl(meth)acrylaten, z. B. die Ethylenoxidkondensate von (Meth)acrylaten, wie H₂C=C(CH₃)COO(CH₂CH₂O)ₙP(OH)₂ und H₂C=C(CH₃)COO(CH₂CH₂O)ₙP(=O)(OH)₂, worin n für 1 bis 50 steht. Weiter geeignet sind Phosphoalkylcrotonate, Phosphoalkylmaleate, Phosphoalkylfumarate, Phosphodialkyl(meth)acrylate, Phosphodialkylcrotonate und Allylphosphate. Weitere geeignete phosphorgruppenhaltige Monomere sind in WO 99/25780 und US 4,733,005 beschrieben, worauf hier Bezug genommen wird.

Geeignete Ester α,β-ethylenisch ungesättigter Mono- und Dicarbonsäuren mit C₂-C₃₀-Alkandiolen sind z. B. 2-Hydroxyethylacrylat, 2-Hydroxyethylmethacrylat, 2-Hydroxyethylethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat, 4-Hydroxybutylacrylat, 4-Hydroxybutylmethacrylat, 6-Hydroxyhexylacrylat, 6-Hydroxyhexylmethacrylat, 3-Hydroxy-2-ethylhexylacrylat, 3-Hydroxy-2-ethylhexylmethacrylat etc.

Geeignete primäre Amide α,β-ethylenisch ungesättigter Monocarbonsäuren und deren N-Alkyl- und N,N-Dialkylderivate sind Acrylsäureamid, Methacrylsäureamid, N-Methyl(meth)acrylamid, N-Ethyl(meth)acrylamid, N-Propyl(meth)acrylamid, N-(n-Butyl)(meth)acrylamid, N-(tert.-Butyl)(meth)acrylamid, N-(n-Octyl)(meth)acrylamid, N-(1,1,3,3-Tetramethylbutyl)(meth)acrylamid, N-Ethylhexyl(meth)acrylamid, N-(n-Nonyl)(meth)acrylamid, N-(n-Decyl)(meth)acrylamid, N-(n-Undecyl)(meth)acrylamid, N-Tridecyl(meth)acrylamid, N-Myristyl(meth)acrylamid, N-Pentadecyl(meth)acrylamid, N-Palmityl(meth)acrylamid, N-Heptadecyl(meth)acrylamid, N-Nonadecyl(meth)acrylamid, N-Arachinyl(meth)acrylamid, N-Behenyl(meth)acrylamid, N-Lignoceryl(meth)acrylamid, N-Cerotinyl(meth)acrylamid, N-Melissinyl(meth)acrylamid, N-Palmitoleinyl(meth)acrylamid, N-Oleyl(meth)acrylamid, N-Linolyl(meth)acrylamid, N-Linolenyl(meth)acrylamid, N-Stearyl(meth)acrylamid, N-Lauryl(meth)acrylamid, N,N-Dimethyl(meth)acrylamid, N,N-Diethyl(meth)acrylamid, Morpholinyl(meth)acrylamid.

Geeignete N-Vinyllactame und deren Derivate sind z. B. N-Vinylpyrrolidon, N-Vinylpiperidon, N-Vinylcaprolactam, N-Vinyl-5-methyl-2-pyrrolidon, N-Vinyl-5-ethyl-2-pyrrolidon, N-Vinyl-6-methyl-2-piperidon, N-Vinyl-6-ethyl-2-piperidon, N-Vinyl-7-methyl-2-caprolactam, N-Vinyl-7-ethyl-2-caprolactam etc.

Geeignete offenkettige N-Vinylamidverbindungen sind beispielsweise N-Vinylformamid, N-Vinyl-N-methylformamid, N-Vinylacetamid, N-Vinyl-N-methylacetamid, N-Vinyl-N-ethylacetamid, N-Vinylpropionamid, N-Vinyl-N-methylpropionamid und N-Vinylbutyramid.

Geeignete Ester von α,β-ethylenisch ungesättigten Mono- und Dicarbonsäuren mit Aminoalkoholen sind N,N-Dimethylaminomethyl(meth)acrylat, N,N-Dimethylaminoethyl(meth)acrylat, N,N-Diethylaminoethylacrylat, N,N-Dimethylaminopropyl(meth)acrylat, N,N-Diethylaminopropyl(meth)acrylat und N,N-Dimethylaminocyclohexyl(meth)acrylat.

Geeignete Amide α,β-ethylenisch ungesättigter Mono- und Dicarbonsäuren mit Diaminen, welche mindestens eine primäre oder sekundäre Aminogruppe aufweisen sind N-[2-(Dimethylamino)ethyl]acrylamid, N-[2-(Dimethylamino)ethyl]methacrylamid, N-[3-(Dimethylamino)propyl]acrylamid, N-[3-(Dimethylamino)propyl]methacrylamid, N-[4-(Dimethylamino)butyl]acrylamid, N-[4-(Dimethylamino)-butyl]methacrylamid, N-[2-(Diethylamino)ethyl]acrylamid, N-[4-(Dimethylamino)cyclohexyl]acrylamid, N-[4-(Dimethylamino)cyclohexyl]methacrylamid etc.

Geeignete Monomere M) sind weiterhin N,N-Diallylamine und N,N-Diallyl-N-alkylamine und deren Säureadditionssalze und Quaternisierungsprodukte. Alkyl steht dabei vorzugsweise für C₁-C₂₄-Alkyl. Bevorzugt sind N,N-Diallyl-N-methylamin und N,N-Diallyl-N,N-dimethylammonium-Verbindungen, wie z. B. die Chloride und Bromide.

Geeignete Monomere M) sind weiterhin Vinyl- und Allyl-substituierte Stickstoffheterocyclen, wie N-Vinylimidazol, N-Vinyl-2-methylimidazol, Vinyl- und Allyl-substituierte heteroaromatische Verbindungen, wie 2- und 4-Vinylpyridin, 2- und 4-Allylpyridin, und die Salze davon.

Geeignete C₂-C₈-Monoolefine und nicht aromatische Kohlenwasserstoffe mit mindestens zwei konjugierten Doppelbindungen sind z. B. Ethylen, Propylen, Isobutylen, Isopren, Butadien, etc.

Geeignete Polyether(meth)acrylate sind Verbindungen der allgemeinen Formel (E) 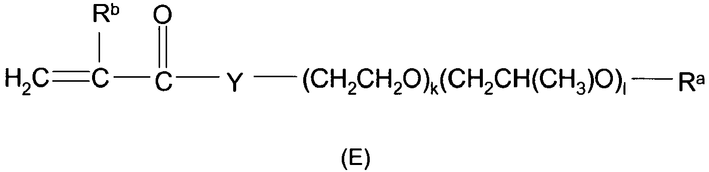 worin
die Reihenfolge der Alkylenoxideinheiten beliebig ist,
k und I unabhängig voneinander für eine ganze Zahl von 0 bis 100 stehen, wobei die Summe aus k und I mindestens 3 beträgt,
R^{a} für Wasserstoff, C₁-C₃₀-Alkyl, C₅-C₈-Cycloalkyl oder C₆-C₁₄-Aryl steht,
R^{b} für Wasserstoff oder C₁-C₈-Alkyl steht,
Y für O oder NR^{c} steht, wobei R^{c} für Wasserstoff, C₁-C₃₀-Alkyl oder C₅-C₈-Cycloalkyl steht.

Bevorzugt steht k für eine ganze Zahl von 3 bis 50, insbesondere 4 bis 25. Bevorzugt steht I für eine ganze Zahl von 3 bis 50, insbesondere 4 bis 25.

Vorzugsweise steht R^{a} in der Formel (E) für Wasserstoff, Methyl, Ethyl, n-Propyl, Isopropyl, n-Butyl, sec-Butyl, n-Pentyl, n-Hexyl, Octyl, 2-Ethylhexyl, Decyl, Lauryl, Palmityl oder Stearyl.

Bevorzugt steht R^{b} für Wasserstoff, Methyl, Ethyl, n-Propyl, Isopropyl, n-Butyl, sek.-Butyl, tert.-Butyl, n-Pentyl oder n-Hexyl, insbesondere für Wasserstoff, Methyl oder Ethyl. Besonders bevorzugt steht R^{b} für Wasserstoff oder Methyl.

Vorzugsweise steht Y in der Formel (A) für O.

In einer speziellen Ausführung wird bei der radikalischen Emulsionspolymerisation zur Herstellung von Pd) wenigstens ein Polyether(meth)acrylat eingesetzt. Dieses wird dann vorzugsweise in einer Menge bis zu 25 Gew.-%, bevorzugt bis zu 20 Gew.-%, bezogen auf das Gesamtgewicht der Monomere M), eingesetzt. Besonders bevorzugt wird zur Emulsionspolymerisation 0,1 bis zu 20 Gew.-%, bevorzugt 1 bis 15 Gew.-% wenigstens eines Polyether(meth)acrylats eingesetzt. Geeignete Polyether(meth)-acrylate sind z. B. die Polykondensationsprodukte der zuvor genannten α,β-ethylenisch ungesättigten Mono- und/oder Dicarbonsäuren und deren Säurechloriden, -amiden und -anhydriden mit Polyetherolen. Geeignete Polyetherole können leicht durch Umsetzung von Ethylenoxid, 1,2-Propylenoxid und/oder Epichlorhydrin mit einem Startermolekül, wie Wasser oder einem kurzkettigen Alkohol R^{a}-OH hergestellt werden. Die Alkylenoxide können einzeln, alternierend nacheinander oder als Mischung eingesetzt werden. Die Polyetheracrylate können allein oder in Mischungen zur Herstellung der erfindungsgemäß eingesetzten Emulsionspolymerisate verwendet werden.

Die Polymerdispersion Pd) enthält vorzugsweise wenigstens ein Polyether(meth)-acrylat einpolymerisiert, das ausgewählt ist unter Verbindungen der allgemeinen Formeln I oder II oder Mischungen davon 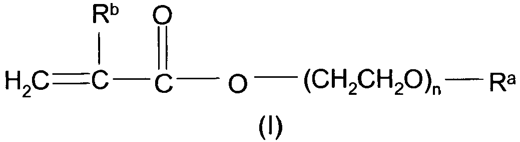 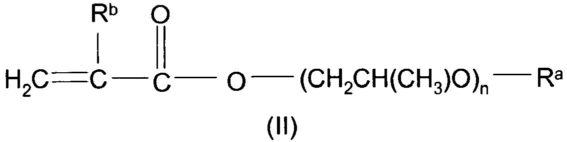 worin
n für eine ganze Zahl von 3 bis 15, vorzugsweise 4 bis 12 steht,
R^{a} für Wasserstoff, C₁-C₂₀-Alkyl, C₅-C₈-Cycloalkyl oder C₆-C₁₄- Aryl steht,
R^{b} für Wasserstoff oder Methyl steht.

Geeignete Polyether(meth)acrylate sind kommerziell erhältlich, z. B. in Form verschiedener Produkte der Bezeichnung Bisomer ® von Laporte Performance Chemicals, UK. Dazu zählt z. B. Bisomer ® MPEG 350 MA, ein Methoxypolyethylenglykolmonomethacrylat.

Nach einer weiteren bevorzugten Ausführung wird bei der radikalischen Emulsionspolymerisation zur Herstellung von Pd) kein Polyether(meth)acrylat eingesetzt.

In einer weiteren speziellen Ausführung wird bei der radikalischen Emulsionspolymerisation zur Herstellung von Pd) wenigstens ein Harnstoffgruppen aufweisendes Monomer eingesetzt. Dieses wird vorzugsweise in einer Menge bis zu 25 Gew.-%, bevorzugt bis zu 20 Gew.-% bezogen auf das Gesamtgewicht der Monomere M), eingesetzt. Besonders bevorzugt wird zur Emulsionspolymerisation 0,1 bis zu 20 Gew.-%, insbesondere 1 bis 15 Gew.-% wenigstens eines Harnstoffgruppen aufweisenden Monomers eingesetzt. Geeignete Harnstoffgruppen aufweisende Monomere sind z. B. N-Vinyl- oder N-Allylharnstoff oder Derivate des Imidazolidin-2-ons. Dazu zählen N-Vinyl- und N-Allylimidazolidin-2-on, N-Vinyloxyethylimidazolidin-2-on, N-(2-(Meth)acrylamidoethyl)imidazolidin-2-on, N-(2-(Meth)acryloxyethyl)imidazolidin-2-on (= 2-Ureido(meth)acrylat), N-[2-((Meth)acryloxyacetamido)ethyl]imidazolidin-2-on etc.

Bevorzugte Harnstoffgruppen aufweisende Monomere sind N-(2-Acryloxyethyl)imidazolidin-2-on und N-(2-Methacryloxyethyl)imidazolidin-2-on. Besonders bevorzugt ist N-(2-Methacryloxyethyl)imidazolidin-2-on (2-Ureidomethacrylat, UMA).

Geeignete Vinylmonomere mit vernetzenden Gruppen sind Allyl-, Glycidyl- oder Hydroxyalkyl(meth)acrylate, Acetoacetoxyester, Acetoacetoxyamide, Keto- und Aldehydfunktionelle Vinylmonomere, ketogruppenhaltige Amide und silanfunktionelle (Meth)acrylmonomere. Bevorzugt sind Diacetonacrylamid, Acetoacetoxyethylacrylat und Acetoacetoxyethylmethacrylat (AAEM). Diese Vinylmonomere sind zu einer Reaktion mit einem Vernetzer befähigt, der funktionelle Gruppen aufweist, die zu einer Reaktion mit einer dazu komplementären vernetzenden Gruppe des Vinylmonomers befähigt sind. Geeignete Vernetzer sind z. B. Dihydrazide wie Adipinsäuredihydrazid (ADDH) etc.

Nach einer weiteren bevorzugten Ausführung wird bei der radikalischen Emulsionspolymerisation zur Herstellung von Pd) kein Harnstoffgruppen aufweisendes Monomer eingesetzt.

Die zuvor genannten Monomere M) können einzeln, in Form von Mischungen innerhalb einer Monomerklasse oder in Form von Mischungen aus verschiedenen Monomerklassen eingesetzt werden.

Vorzugsweise werden zur Emulsionspolymerisation mindestens 40 Gew.-%, besonders bevorzugt mindestens 60 Gew.-%, insbesondere mindestens 80 Gew.-%, bezogen auf das Gesamtgewicht der Monomere M), wenigstens eines Monomers M1) eingesetzt, das ausgewählt ist unter Estern α,β-ethylenisch ungesättigter Mono- und Dicarbonsäuren mit C₁-C₂₀-Alkanolen, Vinylaromaten, Estern von Vinylalkohol mit C₁-C₃₀-Monocarbonsäuren, ethylenisch ungesättigten Nitrilen, Vinylhalogeniden, Vinylidenhalogeniden und Mischungen davon (Hauptmonomere). Vorzugsweise werden die Monomere M1) in einer Menge von bis zu 99,9 Gew.-%, besonders bevorzugt bis zu 99,5 Gew.-%, insbesondere bis zu 99 Gew.-%, bezogen auf das Gesamtgewicht der Monomere M), zur Emulsionspolymerisation eingesetzt.

Die Hauptmonomere M1) sind vorzugsweise ausgewählt unter Methyl(meth)acrylat, Ethyl(meth)acrylat, n-Propyl(meth)acrylat, Isopropyl(meth)acrylat, n-Butyl(meth)acrylat, sec.-Butyl(meth)acrylat, tert.-Butyl(meth)acrylat, n-Pentyl(meth)acrylat, n-Hexyl(meth)acrylat, n-Heptyl(meth)acrylat, n-Octyl(meth)acrylat, Ethylhexyl(meth)acrylat, Styrol, 2-Methylstyrol, Vinylacetat, Acrylnitril, Methacrylnitril, Butadien und Mischungen davon.

Zusätzlich zu wenigstens einem Hauptmonomer M1) kann bei der radikalischen Emulsionspolymerisation zur Herstellung von Pd) wenigstens ein weiteres Monomer M2) eingesetzt werden, das allgemein in untergeordnetem Maße vorliegt (Nebenmonomere). Vorzugsweise werden zur Emulsionspolymerisation bis zu 60 Gew.-%, besonders bevorzugt bis zu 40 Gew.-%, insbesondere bis zu 20 Gew.-%, bezogen auf das Gesamtgewicht der Monomere M), wenigstens eines Monomers M2) eingesetzt, das ausgewählt ist unter ethylenisch ungesättigten Mono- und Dicarbonsäuren und den Anhydriden und Halbestern ethylenisch ungesättigter Dicarbonsäuren, (Meth)acrylamiden, C₁-C₁₀-Hydroxyalkyl(meth)acrylaten, C₁-C₁₀-Hydroxyalkyl(meth)acrylamiden, Polyether(meth)acrylaten, Harnstoffgruppen aufweisenden Monomeren, Acetoacetoxyalkyl(meth)arylaten, Acetoacetoxyalkyk(meth)acrylamiden und Mischungen davon. Vorzugsweise werden die Monomere M2), soweit vorhanden, in einer Menge von mindestens 0,1 Gew.-%, besonders bevorzugt mindestens 0,5 Gew.-%, insbesondere mindestens 1 Gew.-%, bezogen auf das Gesamtgewicht der Monomere M), zur Emulsionspolymerisation eingesetzt.

Besonders bevorzugt werden zur Emulsionspolymerisation 0,1 bis zu 60 Gew.-%, bevorzugt 0,5 bis 40 Gew.-%, insbesondere 0,1 bis 20 Gew.-% wenigstens eines Monomers M2) eingesetzt. Die Monomere M2) sind speziell ausgewählt ist unter Acrylsäure, Methacrylsäure, Itaconsäure, Maleinsäure, Fumarsäure, Maleinsäureanhydrid, Acrylsäureamid, Methacrylsäureamid, 2-Hydroxyethylacrylat, 2-Hydroxyethylmethacrylat, 2-Hydroxyethylacrylamid, 2-Hydroxyethylmethacrylamid, Methoxypolyethylenglykolmonomethacrylat, 2-Ureidomethacrylat, Acetoacetoxyethylmethacrylat und Mischungen davon.

Besonders geeignete Monomerkombinationen für das erfindungsgemäße Verfahren sind die im Folgenden aufgeführten:
C₁-C₁₀-Alkyl(meth)acrylate und Mischungen davon, speziell
Ethylhexylacrylat, Methylmethacrylat;
n-Butylacrylat, Methylmethacrylat;
n-Butylacrylat, Ethylhexylacrylat.

Mischungen aus wenigstens einem C₁-C₁₀-Alkyl(meth)acrylat und wenigstens einem Vinylaromaten, speziell
n-Butylacrylat, Methylmethacrylat, Styrol;
n-Butylacrylat, Styrol;
n-Butylacrylat, Ethylhexylacrylat, Styrol;
Ethylhexylacrylat, Styrol;
Ethylhexylacrylat, Methylmethacrylat, Styrol.

Mischungen aus wenigstens einem Vinylaromaten und wenigstens einem Olefin, ausgewählt unter C₂-C₈-Monoolefinen und nicht aromatischen Kohlenwasserstoffen mit mindestens zwei konjugierten Doppelbindungen, speziell Styrol, Butadien.

Die zuvor genannten besonders geeigneten Monomerkombinationen können darüber hinaus geringe Mengen weiterer Monomere M2) enthalten. Diese sind vorzugsweise ausgewählt unter Acrylsäure, Methacrylsäure, Acrylamid, Methacrylamid, Methoxypolyethylenglykolmonomethacrylat, 2-Ureidomethacrylat, Acetoacetoxyethylmethacrylat und Mischungen davon.

Bei der Herstellung der erfindungsgemäßen Polymerdispersionen kann zusätzlich zu den zuvor genannten Monomeren M) wenigstens ein Vernetzer eingesetzt werden. Monomere, die eine vernetzende Funktion besitzen, sind Verbindungen mit mindestens zwei polymerisierbaren, ethylenisch ungesättigten, nichtkonjugierten Doppelbindungen im Molekül. Eine Vernetzung kann auch z. B. durch funktionelle Gruppen erfolgen, welche mit dazu komplementären funktionellen Gruppen eine chemische Vernetzungsreaktion eingehen können. Dabei können die komplementären Gruppen beide an das Emulsionspolymerisat gebunden sein. Zur Vernetzung kann ein Vernetzer eingesetzt werden, der befähigt ist, mit funktionellen Gruppen des Emulsionspolymerisats eine chemische Vernetzungsreaktion eingehen zu können.

Geeignete Vernetzer sind z. B. Acrylester, Methacrylester, Allylether oder Vinylether von mindestens zweiwertigen Alkoholen. Die OH-Gruppen der zugrundeliegenden Alkohole können dabei ganz oder teilweise verethert oder verestert sein; die Vernetzer enthalten aber mindestens zwei ethylenisch ungesättigte Gruppen.

Beispiele für die zugrundeliegenden Alkohole sind zweiwertige Alkohole wie 1,2-Ethandiol, 1,2-Propandiol, 1,3-Propandiol, 1,2-Butandiol, 1,3-Butandiol, 2,3-Butandiol, 1,4-Butandiol, But-2-en-1,4-diol, 1,2-Pentandiol, 1,5-Pentandiol, 1,2-Hexandiol, 1,6-Hexandiol, 1,10-Decandiol, 1,2-Dodecandiol, 1,12-Dodecandiol, Neopentylglykol, 3-Methylpentan-1,5-diol, 2,5-Dimethyl-1,3-hexandiol, 2,2,4-Trimethyl-1,3-pentandiol, 1,2-Cyclohexandiol, 1,4-Cyclohexandiol, 1,4-Bis(hydroxymethyl)cyclohexan, Hydroxypivalinsäure-neopentylglykolmonoester, 2,2-Bis(4-hydroxyphenyl)-propan, 2,2-Bis[4-(2-hydroxypropyl)phenyl]propan, Diethylenglykol, Triethylenglykol, Tetraethylenglykol, Dipropylenglykol, Tripropylenglykol, Tetrapropylenglykol, 3-Thiapentan-1,5-diol, sowie Polyethylenglykole, Polypropylenglykole und Polytetrahydrofurane mit Molekulargewichten von jeweils 200 bis 10 000. Außer den Homopolymerisaten des Ethylenoxids bzw. Propylenoxids können auch Blockcopolymerisate aus Ethylenoxid oder Propylenoxid oder Copolymerisate, die Ethylenoxid- und Propylenoxid-Gruppen eingebaut enthalten, eingesetzt werden. Beispiele für zugrundeliegende Alkohole mit mehr als zwei OH-Gruppen sind Trimethylolpropan, Glycerin, Pentaerythrit, 1,2,5-Pentantriol, 1,2,6-Hexantriol, Cyanursäure, Sorbitan, Zucker wie Saccharose, Glucose, Mannose. Selbstverständlich können die mehrwertigen Alkohole auch nach Umsetzung mit Ethylenoxid oder Propylenoxid als die entsprechenden Ethoxylate bzw. Propoxylate eingesetzt werden. Die mehrwertigen Alkohole können auch zunächst durch Umsetzung mit Epichlorhydrin in die entsprechenden Glycidylether überführt werden.

Weitere geeignete Vernetzer sind die Vinylester oder die Ester einwertiger, ungesättigter Alkohole mit ethylenisch ungesättigten C₃-C₆-Carbonsäuren, beispielsweise Acrylsäure, Methacrylsäure, Itaconsäure, Maleinsäure oder Fumarsäure. Beispiele für solche Alkohole sind Allylalkohol, 1-Buten-3-ol, 5-Hexen-1-ol, 1-Octen-3-ol, 9-Decen-1-ol, Dicyclopentenylalkohol, 10-Undecen-1-ol, Zimtalkohol, Citronellol, Crotylalkohol oder cis-9-Octadecen-1-ol. Man kann aber auch die einwertigen, ungesättigten Alkohole mit mehrwertigen Carbonsäuren verestern, beispielsweise Malonsäure, Weinsäure, Trimellithsäure, Phthalsäure, Terephthalsäure, Citronensäure oder Bernsteinsäure.

Weitere geeignete Vernetzer sind Ester ungesättigter Carbonsäuren mit den oben beschriebenen mehrwertigen Alkoholen, beispielsweise der Ölsäure, Crotonsäure, Zimtsäure oder 10-Undecensäure.

Geeignet als Vernetzer sind außerdem geradkettige oder verzweigte, lineare oder cyclische, aliphatische oder aromatische Kohlenwasserstoffe, die über mindestens zwei Doppelbindungen verfügen, die bei aliphatischen Kohlenwasserstoffen nicht konjugiert sein dürfen, z. B. Divinylbenzol, Divinyltoluol, 1,7-Octadien, 1,9-Decadien, 4-Vinyl-1-cyclohexen, Trivinylcyclohexan oder Polybutadiene mit Molekulargewichten von 200 bis 20 000.

Als Vernetzer sind ferner geeignet die Acrylsäureamide, Methacrylsäureamide und N-Allylamine von mindestens zweiwertigen Aminen. Solche Amine sind z. B. 1,2-Diaminoethan, 1,3-Diaminopropan, 1,4-Diaminobutan, 1,6-Diaminohexan, 1,12-Dodecandiamin, Piperazin, Diethylentriamin oder Isophorondiamin. Ebenfalls geeignet sind die Amide aus Allylamin und ungesättigten Carbonsäuren, wie Acrylsäure, Methacrylsäure, Itaconsäure, Maleinsäure, oder mindestens zweiwertigen Carbonsäuren, wie sie oben beschrieben wurden.

Ferner sind Triallylamin und Triallylmonoalkylammoniumsalze, z. B. Triallylmethylammoniumchlorid oder -methylsulfat, als Vernetzer geeignet.

Geeignet sind auch N-Vinyl-Verbindungen von Harnstoffderivaten, mindestens zweiwertigen Amiden, Cyanuraten oder Urethanen, beispielsweise von Harnstoff, Ethylenharnstoff, Propylenharnstoff oder Weinsäurediamid, z. B. N,N'-Divinylethylenharnstoff oder N,N'-Divinylpropylenharnstoff.

Weitere geeignete Vernetzer sind Divinyldioxan, Tetraallylsilan oder Tetravinylsilan. Selbstverständlich können auch Mischungen der vorgenannten Verbindungen eingesetzt werden. Vorzugsweise werden wasserlösliche Vernetzer eingesetzt.

Weiterhin zählen zu den vernetzenden Monomeren auch solche, die neben einer ethylenisch ungesättigten Doppelbindung eine reaktive funktionelle Gruppe, z. B. eine Aldehydgruppe, eine Ketogruppe oder eine Oxirangruppe aufweisen, die mit einem zugesetzten Vernetzer reagieren können. Vorzugsweise handelt es sich bei den funktionellen Gruppen um Keto- oder Aldehydgruppen. Die Keto- oder Aldehydgruppen sind vorzugsweise durch Copolymerisation von copolymerisierbaren, ethylenisch ungesättigten Verbindungen mit Keto- oder Aldehydgruppen an das Polymer gebunden. Geeignete derartige Verbindungen sind Acrolein, Methacrolein, Vinylalkylketone mit 1 bis 20, vorzugsweise 1 bis 10 Kohlenstoffatome im Alkylrest, Formylstyrol, (Meth-)acrylsäurealkylester mit ein oder zwei Keto- oder Aldehyd-, bzw. einer Aldehyd- und einer Ketogruppe im Alkylrest, wobei der Alkylrest vorzugsweise insgesamt 3 bis 10 Kohlenstoffatome umfasst, z. B. (Meth)acryloxyalkylpropanale, wie sie in der DE-A-2722097 beschrieben sind. Des Weiteren eignen sich auch N-Oxoalkyl(meth)acrylamide, wie sie z. B. aus der US-A-4226007, der DE-A-2061213 oder DE-A-2207209 bekannt sind. Besonders bevorzugt sind Acetoacetyl(meth)acrylat, Acetoacetoxyethyl(meth)acrylat und insbesondere Diacetonacrylamid. Bei den Vernetzern handelt es sich vorzugsweise um Verbindungen mit mindestens zwei funktionellen Gruppen, insbesondere 2 bis 5 funktionellen Gruppen, die mit den funktionellen Gruppen des Polymerisats, speziell den Keto- oder Aldehydgruppen, eine Vernetzungsreaktion eingehen können. Dazu zählen z. B. Hydrazid-, Hydroxylamin- oder Oximether- oder Aminogruppen als funktionelle Gruppen für die Vernetzung der Keto- oder Aldehydgruppen. Geeignete Verbindungen mit Hydrazidgruppen sind z. B. Polycarbonsäurehydrazide mit einem Molgewicht von bis zu 500 g/mol. Besonders bevorzugte Hydrazidverbindungen sind Dicarbonsäuredihydrazide mit bevorzugt 2 bis 10 C-Atomen. Dazu zählen z. B. Oxalsäuredihydrazid, Malonsäuredihydrazid, Bernsteinsäuredihydrazid, Glutarsäuredihydrazid, Adipinsäuredihydrazid, Sebacinsäuredihydrazid, Maleinsäuredihydrazid, Fumarsäuredihydrazid, Itaconsäuredihydrazid und/oder Isophthalsäuredihydrazid. Von besonderem Interesse sind: Adipinsäuredihydrazid, Sebacinsäuredihydrazid und Isophthalsäuredihydrazid. Geeignete Verbindungen mit Hydroxylamin- oder Oximethergruppen sind z. B. in WO 93/25588 genannt.

Die vernetzende Komponente wird vorzugsweise in einer Menge von 0,0005 bis 5 Gew.-%, bevorzugt 0,001 bis 2,5 Gew.-%, insbesondere 0,01 bis 1,5 Gew.-%, bezogen auf das Gesamtgewicht der zur Polymerisation eingesetzten Monomere (einschließlich des Vernetzers), eingesetzt.

Eine spezielle Ausführungsform betrifft Polymerdispersionen Pd), die keinen Vernetzer einpolymerisiert enthalten.

Die radikalische Polymerisation des Monomergemischs M) kann in Gegenwart mindestens eines Reglers erfolgen. Regler werden vorzugsweise in einer Einsatzmenge von 0,0005 bis 5 Gew.-%, besonders bevorzugt von 0,001 bis 2,5 Gew.-% und insbesondere von 0,01 bis 1,5 Gew.-%, bezogen auf das Gesamtgewicht der zur Polymerisation eingesetzten Monomere, eingesetzt.

Als Regler (Polymerisationsregler) werden allgemein Verbindungen mit hohen Übertragungskonstanten bezeichnet. Regler beschleunigen Kettenübertragungsreaktionen und bewirken damit eine Herabsetzung des Polymerisationsgrades der resultierenden Polymeren, ohne die Bruttoreaktions-Geschwindigkeit zu beeinflussen. Bei den Reglern kann man zwischen mono-, bi- oder polyfunktionalen Reglern unterscheiden, je nach Anzahl der funktionellen Gruppen im Molekül, die zu einer oder mehreren Kettenübertragungsreaktionen führen können. Geeignete Regler werden beispielsweise ausführlich beschrieben von K. C. Berger und G. Brandrup in J. Brandrup, E. H. Immergut, Polymer Handbook, 3. Aufl., John Wiley & Sons, New York, 1989, S. II/81 - II/141.

Als Regler eignen sich beispielsweise Aldehyde wie Formaldehyd, Acetaldehyd, Propionaldehyd, n-Butyraldehyd, Isobutyraldehyd.

Ferner können auch als Regler eingesetzt werden: Ameisensäure, ihre Salze oder Ester, wie Ammoniumformiat, 2,5-Diphenyl-1-hexen, Hydroxylammoniumsulfat, und Hydroxylammoniumphosphat.

Weitere geeignete Regler sind Halogenverbindungen, z. B. Alkylhalogenide, wie Tetrachlormethan, Chloroform, Bromtrichlormethan, Bromoform, Allylbromid und Benzylverbindungen, wie Benzylchlorid oder Benzylbromid.

Weitere geeignete Regler sind Allylverbindungen, wie z. B. Allylalkohol, funktionalisierte Allylether, wie Allylethoxylate, Alkylallylether, oder Glycerinmonoallylether.

Bevorzugt werden als Regler Verbindungen eingesetzt, die Schwefel in gebundener Form enthalten.

Verbindungen dieser Art sind beispielsweise anorganische Hydrogensulfite, Disulfite und Dithionite oder organische Sulfide, Disulfide, Polysulfide, Sulfoxide und Sulfone. Dazu zählen Di-n-butylsulfid, Di-n-octylsulfid, Diphenylsulfid, Thiodiglykol, Ethylthioethanol, Diisopropyldisulfid, Di-n-butyldisulfid, Di-n-hexyldisulfid, Diacetyldisulfid, Diethanolsulfid, Di-t-butyltrisulfid, Dimethylsulfoxid, Dialkylsulfid, Dialkyldisulfid und/oder Diarylsulfid.

Geeignet als Polymerisationsregler sind weiterhin Thiole (Verbindungen, die Schwefel in Form von SH-Gruppen erhalten, auch als Mercaptane bezeichnet). Bevorzugt sind als Regler mono-, bi- und polyfunktionale Mercaptane, Mercaptoalkohole und/oder Mercaptocarbonsäuren. Beispiele für diese Verbindungen sind Allylthioglykolate, Ethylthioglykolat, Cystein, 2-Mercaptoethanol, 1,3-Mercaptopropanol, 3-Mercaptopropan-1,2-diol, 1,4-Mercaptobutanol, Mercaptoessigsäure, 3-Mercaptopropionsäure, Mercaptobernsteinsäure, Thioglycerin, Thioessigsäure, Thioharnstoff und Alkylmercaptane wie n-Butylmercaptan, n-Hexylmercaptan oder n-Dodecylmercaptan.

Beispiele für bifunktionale Regler, die zwei Schwefelatome in gebundener Form enthalten, sind bifunktionale Thiole wie z. B. Dimercaptopropansulfonsäure (Natriumsalz), Dimercaptobernsteinsäure, Dimercapto-1-propanol, Dimercaptoethan, Dimercaptopropan, Dimercaptobutan, Dimercaptopentan, Dimercaptohexan, Ethylenglykol-bisthioglykolate und Butandiol-bis-thioglykolat. Beispiele für polyfunktionale Regler sind Verbindungen, die mehr als zwei Schwefelatome in gebundener Form enthalten. Beispiele hierfür sind trifunktionale und/oder tetrafunktionale Mercaptane.

Alle genannten Regler können einzeln oder in Kombination miteinander eingesetzt werden. Eine spezielle Ausführungsform betrifft Polymerdispersionen Pd), die durch radikalische Emulsionspolymerisation ohne Zusatz eines Reglers hergestellt werden.

Zur Herstellung der Polymerisate können die Monomeren mit Hilfe von Radikale bildenden Initiatoren polymerisiert werden.

Als Initiatoren für die radikalische Polymerisation können die hierfür üblichen Peroxo- und/oder Azo-Verbindungen eingesetzt werden, beispielsweise Alkali- oder Ammoniumperoxidisulfate, Diacetylperoxid, Dibenzoylperoxid, Succinylperoxid, Di-tert.-butylperoxid, tert.-Butylperbenzoat, tert.-Butylperpivalat, tert.-Butylperoxy-2-ethylhexanoat, tert.-Butylpermaleinat, Cumolhydroperoxid, Diisopropylperoxidicarbamat, Bis-(o-toluoyl)peroxid, Didecanoylperoxid, Dioctanoylperoxid, Dilauroylperoxid, tert.-Butylperisobutyrat, tert.-Butylperacetat, Di-tert.-Amylperoxid, tert.-Butylhydroperoxid, Azo-bis-isobutyronitril, 2,2'-Azo-bis-(2-amidinopropan)dihydrochlorid oder 2,2'-Azo-bis-(2-methyl-butyronitril). Geeignet sind auch Gemische dieser Initiatoren.

Als Initiatoren können auch Reduktions/Oxidations-(= Red/Ox)-Initiator Systeme eingesetzt werden. Die Red/Ox-Initiator-Systeme bestehen aus mindestens einem meist anorganischen Reduktionsmittel und einem anorganischen oder organischen Oxidationsmittel. Bei der Oxidationskomponente handelt es sich z. B. um die bereits vorstehend genannten Initiatoren für die Emulsionspolymerisation. Bei der Reduktionskomponenten handelt es sich z. B. um Alkalimetallsalze der schwefligen Säure, wie z. B. Natriumsulfit, Natriumhydrogensulfit, Alkalisalze der dischwefligen Säure wie Natriumdisulfit, Bisulfitadditionsverbindungen aliphatischer Aldehyde und Ketone wie Acetonbisulfit oder Reduktionsmittel wie Hydroxymethansulfinsäure und deren Salze, oder Ascorbinsäure. Die Red/Ox-Initiator-Systeme können unter Mitverwendung löslicher Metallverbindungen, deren metallische Komponente in mehreren Wertigkeitsstufen auftreten kann, verwendet werden. Übliche Red/Ox-Initiator-Systeme sind z. B. Ascorbinsäure/Eisen(II)sulfat/Natriumperoxodisulfat, tert-Butylhydroperoxid/Natriumdisulfit, tert-Butylhydroperoxid/Na-Hydroxymethansulfinsäure. Die einzelnen Komponenten, z. B. die Reduktionskomponente, können auch Mischungen sein z. B. eine Mischung aus dem Natriumsalz der Hydroxymethansulfinsäure und Natriumdisulfit.

Die Menge der Initiatoren beträgt im Allgemeinen 0,1 bis 10 Gew.-%, bevorzugt 0,1 bis 5 Gew.-%, bezogen auf alle zu polymerisierenden Monomeren. Es können auch mehrere, verschiedene Initiatoren bei der Emulsionspolymerisation Verwendung finden.

Die Herstellung der Polymerdispersion Pd), erfolgt üblicherweise in Gegenwart wenigstens einer grenzflächenaktiven Verbindung. Eine ausführliche Beschreibung geeigneter Schutzkolloide findet sich in Houben-Weyl, Methoden der organischen Chemie, Band XIV/1, Makromolekulare Stoffe, Georg Thieme Verlag, Stuttgart, 1961, S. 411 bis 420. Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Als Emulgatoren sind sowohl anionische, kationische als auch nichtionische Emulgatoren geeignet. Vorzugsweise werden als grenzflächenaktive Substanzen Emulgatoren eingesetzt, deren relative Molekulargewichte üblicherweise unterhalb derer von Schutzkolloiden liegen.

Brauchbare nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: C₄-C₁₀), Ethoxylate langkettiger Alkohole (EO-Grad: 3 bis 100, Alkylrest: C₈-C₃₆) sowie Polyethylenoxid/Polypropylenoxid-Homo- und Copolymere. Diese können die Alkylenoxideinheiten statistisch verteilt oder in Form von Blöcken einpolymerisiert enthalten. Gut geeignet sind z. B. EO/PO-Blockcopolymere. Bevorzugt werden Ethoxylate langkettiger Alkanole (Alkylrest C₁-C₃₀, mittlerer Ethoxylierungsgrad 5 bis 100) und darunter besonders bevorzugt solche mit einem linearen C₁₂-C₂₀-Alkylrest und einem mittleren Ethoxylierungsgrad von 10 bis 50 sowie ethoxylierte Monoalkylphenole, eingesetzt.

Geeignete anionische Emulgatoren sind beispielsweise Alkali- und Ammoniumsalze von Alkylsulfaten (Alkylrest: C₈-C₂₂), von Schwefelsäurehalbestern ethoxylierter Alkanole (EO-Grad: 2 bis 50, Alkylrest: C₁₂-C₁₈) und ethoxylierter Alkylphenole (EO-Grad: 3 bis 50, Alkylrest: C₄-C₉), von Alkylsulfonsäuren (Alkylrest: C₁₂-C₁₈) und von Alkylarylsulfonsäuren (Alkylrest: C₉-C₁₈). Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192 - 208). Als anionische Emulgatoren sind ebenfalls Bis(phenylsulfonsäure)ether bzw. deren Alkali- oder Ammoniumsalze, die an einem oder beiden aromatischen Ringen eine C₄-C₂₄-Alkylgruppe tragen, geeignet. Diese Verbindungen sind allgemein bekannt, z. B. aus der US-A-4,269,749, und im Handel erhältlich, beispielsweise als Dowfax® 2A1 (Dow Chemical Company).

Geeignete kationische Emulgatoren sind vorzugsweise quartäre Ammoniumhalogenide, z. B. Trimethylcetylammoniumchlorid, Methyltrioctylammoniumchlorid, Benzyltriethylammoniumchlorid oder quartäre Verbindungen von N-C₆-C₂₀-Alkylpyridinen, -morpholinen oder -imidazolen, z. B. N-Laurylpyridiniumchlorid.

Die Menge an Emulgator beträgt im Allgemeinen etwa 0,01 bis 10 Gew.-%, bevorzugt 0,1 bis 5 Gew.-%, bezogen auf die Menge an zu polymerisierenden Monomeren.

Die erfindungsgemäß eingesetzten hochverzweigten Polycarbonate sind in der Regel in Wasser dispergierbar. Davon abweichend nicht in Wasser dispergierbar sind hochverzweigte Polycarbonate, die einer polymeranalogen Umsetzung mit hydrophoben Gruppen unterzogen wurden. In einer speziellen Ausführung eignen sich die hochverzweigten Polycarbonate zur Herstellung einer Polymerdispersion Pd) ohne den Einsatz grenzflächenaktiver Substanzen, wie Emulgatoren, Schutzkolloiden oder Monomeren mit dispergieraktiven Gruppen.

Die Polymerisation erfolgt im Allgemeinen bei Temperaturen in einem Bereich von 0 bis 150 °C, bevorzugt 20 bis 100 °C, besonders bevorzugt 30 bis 95 °C. Die Polymerisation erfolgt vorzugsweise bei Normaldruck, möglich ist jedoch auch eine Polymerisation unter erhöhtem Druck, beispielsweise dem Eigendruck der zur Polymerisation eingesetzten Komponenten. In einer geeigneten Ausführung erfolgt die Polymerisation in Gegenwart wenigstens eines Inertgases, wie z. B. Stickstoff oder Argon.

Das Polymerisationsmedium kann sowohl nur aus Wasser als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes oder auch eine Polymersaat vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies in an sich dem Durchschnittsfachmann bekannter Weise sowohl von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Die bei der Polymerisation entstandenen Dispersionen können im Anschluss an den Polymerisationsprozess einer physikalischen oder chemischen Nachbehandlung unterworfen werden. Solche Verfahren sind beispielsweise die bekannten Verfahren zur Restmonomerenreduzierung, wie z. B. die Nachbehandlung durch Zusatz von Polymerisationsinitiatoren oder Mischungen mehrerer Polymerisationsinitiatoren bei geeigneten Temperaturen, eine Nachbehandlung der Polymerlösung mittels Wasserdampf oder Ammoniakdampf, oder Strippen mit Inertgas oder Behandeln der Reaktionsmischung mit oxidierenden oder reduzierenden Reagenzien, Adsorptionsverfahren wie die Adsorption von Verunreinigung an ausgewählten Medien wie z. B. Aktivkohle oder eine Ultrafiltration.

Die erhaltene wässrige Polymerdispersion Pd) weist üblicherweise einen Feststoffgehalt von 20 bis 70 Gew.-%, vorzugsweise 40 bis 70 Gew.-%, besonders bevorzugt 45 bis 70 Gew.-% und insbesondere bevorzugt von 45 bis 65 Gew.-%, bezogen auf die Polymerdispersion auf.

Den Polymerdispersionen Pd) können weiterhin übliche Hilfs- und Zusatzstoffe zugesetzt werden. Dazu zählen beispielsweise den pH-Wert einstellende Substanzen, Reduktions- und Bleichmittel, wie z. B. die Alkalimetallsalze der Hydroxymethansulfinsäure (z. B. Rongalit® C der BASF Aktiengesellschaft), Komplexbildner, Desodorantien, Geschmacksstoffe, Geruchsstoffe und Viskositätsmodifizierer, wie Alkohole, z. B. Glycerin, Methanol, Ethanol, tert.-Butanol, Glykol etc. Diese Hilfs- und Zusatzstoffe können den Polymerdispersionen in der Vorlage, einem der Zuläufe oder nach Abschluss der Polymerisation zugesetzt werden.

Aufgrund der erfindungsgemäß eingesetzten hochverzweigten Polycarbonate mit wenigstens einem C₈- bis C₃₂-Alkenylrest mit mindestens einer Kohlenstoff-Kohlenstoff-Doppelbindung, sind die Polymerdispersionen Pd) chemisch nachvernetzbar. In einer speziellen Ausführung handelt es sich bei der Vernetzungsreaktion um eine oxidative Vernetzung. Dabei kann es von Vorteil sein, diese Nachvernetzung durch Additivierung der wässrigen Polymerdispersion zu beschleunigen. Dies ist speziell der Fall, wenn die Nachvernetzung bei geringen Temperaturen erfolgen soll, z. B. in einem Bereich unterhalb der Umgebungstemperatur oder im Bereich der Umgebungstemperatur (beispielsweise -10 bis 50 °C, spezieller 0 bis 45 °C).

Geeignete Additive zur Beschleunigung der Nachvernetzung sind radikalbildende Initiatoren und/oder Trockenstoffe (Sikkative). Geeignete radikalbildende Initiatoren sind prinzipiell organische Peroxide, organische Azoverbindungen, C-C-spaltende Initiatoren wie Dialkylperoxide, Peroxocarbonsäuren, Peroxodicarbonate, Peroxidester, Hydroperoxide, Ketonperoxide, Azodinitrile, Benzpinakolsilylether, Benzophenon, Benzophenonderivate und Kombinationen davon.

Zur Sikkativierung eignen sich die für wässrige Alkydharze empfohlenen Metallverbindungen, beispielsweise auf Basis von Co oder Mn (Überblick in U. Poth, Polyester und Alkydharze, Vincentz Network 2005, S. 183 f).

Additive zur Nachvernetzung werden jeweils in einer Menge von 0,0005 bis 5 Gew.-%, bevorzugt 0,001 bis 2,5 Gew.-%, insbesondere 0,01 bis 1,5 Gew.-%, bezogen auf das Gesamtgewicht der zur Polymerisation eingesetzten Monomere (falls vorhanden, einschließlich Vernetzers), eingesetzt.

Die erfindungsgemäß eingesetzten hochverzweigten Polycarbonate zeichnen sich durch eine gute Verträglichkeit mit einer Vielzahl verschiedener Dispersionen aus.

Die erfindungsgemäß eingesetzten hochverzweigten Polycarbonate eignen sich vorteilhaft zur Verbesserung der Härtungseigenschaften wässriger Polymerdispersionen.

Vorzugsweise wird das hochverzweigte Polycarbonat der Polymerdispersion Pd) in einer Menge von 0,1 bis 30 Gew.-%, besonders bevorzugt von 0,5 bis 20 Gew.-%, insbesondere von 1,0 bis 10 Gew.-%, bezogen auf den Gewichtsanteil des Emulsionspolymerisats, zugegeben. Übliche Einsatzmengen des hochverzweigten Polycarbonats liegen z. B. in einem Bereich von 1 bis 5 Gew.-%, bezogen auf den Gewichtsanteil des Emulsionspolymerisats in der Polymerdispersion Pd).

Der Gehalt des Emulsionspolymerisats und der hochverzweigten Polycarbonate in der wässrigen Polymerdispersion Pd) (Feststoffgehalt) liegt vorzugsweise in einem Bereich von 30 bis 60 %, besonders bevorzugt 40 bis 50 %.

Die erfindungsgemäßen wässrigen Polymerdispersionen Pd), die ein Emulsionspolymerisat und wenigstens ein hochverzweigtes Polycarbonat enthalten, können als solche oder gemischt mit weiteren Polymeren als Bindemittelzusammensetzung in wässrigen Beschichtungsmitteln, wie z. B. Anstrichmitteln, beispielsweise Farb- oder Lackmischungen, verwendet werden. Geeignete weitere Polymere sind z. B. filmbildende Polymere. Dazu zählen z. B. Alkydharze. Geeignete Alkydharze sind z. B. wasserlösliche bzw. wasserüberführbare ("wasserreduzierbare", d. h. durch wässrige NaOH oder NH₃ aus einer Lösung in einem Lösemittel in eine wässrige Lösung überführt werden können) Alkydharze, die vorzugsweise ein gewichtsmittleres Molekulargewicht von 5000 bis 40 000 g/mol aufweisen. Geeignet sind weiterhin wässrige Alkydharzemulsionen bzw. modifizierte wässrige Alkydharzemulsionen. Modifiziert bedeutet hier, dass das Alkydharz mit Gruppen wie (Poly-)Urethan, Silan etc. ausgestattet ist. Derartige modifizierte Alkydharzemulsionen haben üblicherweise höhere gewichtsmittlere Molekulargewichte, d. h. von mehr als 40 000 g/mol, speziell von mehr als 100 000 g/mol.

Unter einem Alkydharz versteht man einen Polyester, der mit einem trocknenden Öl, einer Fettsäure oder dergleichen verestert ist (U. Poth, Polyester und Alkydharze, Vincentz Network 2005).

Unter einem wässrigen Alkydharz versteht man insbesondere eine, gegebenenfalls nach Neutralisation, wasserverdünnbare Alkydharzlösung. Sie basiert auf einem Alkydharz mit ausreichend hoher Säurezahl, vorzugsweise im Bereich von 20 bis 80 mg KOH/g Alkydharz (fest). Das gewichtsmittlere Molekulargewicht liegt vorzugsweise in einem Bereich von 5000 bis 40 000 Dalton, besonders bevorzugt von 8000 bis 35 000 Dalton und insbesondere von 10 000 bis 35 000 Dalton. Die Molekulargewichte können mit Größenausschlusschromatographie (SEC) bestimmt werden. Unter Säurezahl versteht man die Menge Kaliumhydroxid, ausgedrückt in mg, die notwendig ist um 1 g der Probe (fest) zu neutralisieren. Das verwendete Öl bzw. die Fettsäure ist die eigenschaftsbestimmende Komponente. Sie erlaubt eine Unterteilung nach dem Fettsäuretriacylglycerol-Gehalt (Ölgehalt, Öllänge) (bzw. bei den Alkyden, in denen die Fettsäuren ja eingebaut, nach entsprechender Umrechnung, wie im Folgenden erwähnt) in kurzölige Alkydharze mit < 40 %, mittelölige Alkydharze mit 40 bis 60 % und langölige Alkydharze mit > 60 % Triacylglycerol, bezogen auf lösemittelfreies Alkydharz (Fettsäure-Gehalt wird ggf. in Triacylglycerol umgerechnet, Faktor ca. 1,045) (Ölgehalt).

Der Feststoffgehalt charakterisiert nach allgemeiner Praxis den "Wirkstoffgehalt" der Dispersion. Die Dispersion wird üblicherweise bei einer Temperatur zwischen 100 und 140 °C bis zur Gewichtskonstanz getrocknet (siehe ISO-Norm 1625). Der Feststoffgehalt gibt die Trockenmasse im Vergleich zur Gesamtmasse (in %) an. Die Trockenmasse umfasst das Polymerisat, Emulgatoren und anorganische Salze (aus Initiatorzersetzung und Neutralisierung). Zu den flüchtigen Bestandteilen zählen das Wasser und die Monomere, die bei der Polymerisation nicht umgesetzt wurden.

Der Ölgehalt der in erfindungsgemäßen wässrigen Polymerdispersionen Pd) zusätzlich verwendeten Alkydharze beträgt bevorzugt 25 bis 55 %. Der Feststoffgehalt der Alkydharze beträgt in der Lieferform in der Regel 30 bis 80 %, in der Einsatzform (d. h. nach Verdünnung mit NH₃ bzw. NaOH/Wasser) 35 bis 50 %.

Bevorzugte Alkydharze sind beispielsweise die Produkte WorIéeSol 61A, WorléeSol 61 E, WorIéeSol 65A der Firma Worlée, und Synthalat W46 oder Synthalat W48 der Firma Synthopol.

Unter einer wässrigen Alkydharzemulsion oder kurz Alkydemulsion versteht man Alkydharze, die gegebenenfalls mit Emulgatoren versetzt, in Wasser dispergiert werden. Im Vergleich zu wasserlöslichen oder verdünnbaren Alkydharzen eignen sich hierfür auch Alkyde mit höheren mittleren Molmassen (U. Poth, Polyester und Alkydharze, Vincentz Network 2005, S. 208 f.).

Unter einer wässrigen Polyurethan-Alkydharzemulsion versteht man ein Polyurethanmodifiziertes Alkydharz, welches in Wasser dispergiert wurde. Eine Urethanmodifizierung kann bei der Alkydsynthese zum Beispiel durch den Ersatz eines Teils des üblichen Phthalsäureanhydrids durch ein Diisocyanat erfolgen [U. Poth, Polyester und Alkydharze, Vincentz Network 2005, Punkt 4.4.3.3. "Urethanmodifizierte Alkydharze" auf Seite 205]. Eine Urethanmodifizierung kann des Weiteren durch eine Reaktion eines Alkyds mit einem mindestens difunktionellen Polyisocyanat erfolgen
(DE 10 2006 054237).

Bevorzugte Alkydharzemulsionen zeichnen sich durch einen Ölgehalt von 25 bis 55 % und eine Säurezahl von 20 bis 60 mg KOH/g aus. Bevorzugte Alkydharzemulsionen bzw. Polyurethan-modifizierte Alkydharzemulsionen sind WorléeSol E 150 W, Worlee-Sol E 280 W, WorléeSol E 530 W oder WorléeSol E 927 W.

Der Einsatz von solchen weiteren filmbildenden Polymeren, speziell Alkydharzen, die den VOC-Gehalt der Beschichtungsmittel erhöhen, ist unter Umständen nicht bevorzugt. Eine spezielle Ausführungsform ist daher ein Beschichtungsmittel, speziell ein Anstrichmittel, das wenigstens eine Dispersion Pd) und wenigstens ein hochverzweigtes Polycarbonat, jedoch kein von dem in der Polymerdispersion enthaltenen Emulsionspolymerisat verschiedenes filmbildendes Polymer aufweist.

Die erfindungsgemäßen Bindemittelzusammensetzungen kommen vorzugsweise in wässrigen Anstrichmitteln zum Einsatz. Diese Anstrichmittel liegen beispielsweise in Form eines unpigmentierten Systems (Klarlacks) oder eines pigmentierten Systems vor. Der Anteil der Pigmente kann durch die Pigmentvolumenkonzentration (PVK) beschrieben werden. Die PVK beschreibt das Verhältnis des Volumens an Pigmenten (Vₚ) und Füllstoffen (V_{F}) zum Gesamtvolumen, bestehend aus den Volumina an Bindemittel (V_{B}), Pigmenten und Füllstoffen eines getrockneten Beschichtungsfilms in Prozent: PVK = (V_{P} + V_{F}) x 100 / (V_{P} + V_{F} + V_{B}). Anstrichmittel lassen sich anhand der PVK beispielsweise wie folgt einteilen:

| | |
|---|---|
| hochgefüllte Innenfarbe, waschbeständig, weiß/matt | ca. 85 |
| Innenfarbe, scheuerbeständig, weiß/matt | ca. 80 |
| Halbglanzfarbe, seidenmatt | ca. 35 |
| Halbglanzfarbe, seidenglänzend | ca. 25 |
| Hochglanzfarbe | ca. 15 - 20 |
| Außenfassadenfarbe, weiß | ca. 45 - 55 |
| Klarlack | 0 |

Ein weiterer Gegenstand der Erfindung ist daher ein Anstrichmittel in Form einer wässrigen Zusammensetzung, enthaltend
- eine Bindemittelzusammensetzung, wie zuvor definiert,
- gegebenenfalls wenigstens ein Pigment
- gegebenenfalls wenigstens einen Füllstoff,
- gegebenenfalls weitere, von Pigmenten und Füllstoffen verschiedene Hilfsmittel, und
- Wasser.

Eine erste bevorzugte Ausführung ist ein Anstrichmittel in Form eines Klarlacks, das keine Pigmente und Füllstoffe enthält.

Eine zweite bevorzugte Ausführung ist ein Anstrichmittel in Form einer Dispersionsfarbe.

Bevorzugt ist ein Anstrichmittel, enthaltend:
- 10 bis 60 Gew.-%, bezogen auf den Festgehalt wenigstens einer Dispersion Pd), wie zuvor definiert,
- 10 bis 70 Gew.-% anorganische Füllstoffe und/oder anorganische Pigmente,
- 0,1 bis 20 Gew.-% übliche Hilfsmittel, und
- Wasser auf 100 Gew.-%.

Der Anteil von Pd) an dem obigen Beschichtungsmittel bezieht sich auf Feststoff, d. h. Emulsionspolymerisat und hochverzweigte(s) Polycarbonat(e), ohne Wasser.

Im Folgenden wird die Zusammensetzung einer üblichen Dispersionsfarbe erläutert. Dispersionsfarben haben in der Regel einen Feststoffgehalt von 30 bis 75 Gew.-% und vorzugsweise 40 bis 65 Gew.-%. Hierunter sind alle Bestandteile der Zubereitung zu verstehen, die nicht Wasser sind, zumindest aber die Gesamtmenge an Bindemittel, Füllstoff, Pigment, Weichmacher, und polymere Hilfsmittel. Lösungsmittel, auch schwerflüchtige Lösungsmitteln zählen nicht zum Feststoffgehalt. Davon entfallen etwa
a) 3 bis 90 Gew.-%, insbesondere 10 bis 60 Gew.-%, auf die Polymerdispersion Pd),
b) 0 bis 85 Gew.-%, bevorzugt 5 bis 60 Gew.-%, insbesondere 10 bis 50 Gew.-%, auf wenigstens ein anorganisches Pigment,
c) 0 bis 85 Gew.-%, insbesondere 5 bis 60 Gew.-%, auf anorganische Füllstoffe und
d) 0,1 bis 40 Gew.-%, insbesondere 0,5 bis 20 Gew.-%, auf übliche Hilfsmittel.

Als Pigment werden im Rahmen dieser Erfindung zusammenfassend alle Pigmente und Füllstoffe, z. B. Farbpigmente, Weißpigmente und anorganische Füllstoffe bezeichnet. Dazu zählen anorganische Weißpigmente wie Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat) oder farbige Pigmente, beispielsweise Eisenoxide, Ruß, Graphit, Zinkgelb, Zinkgrün, Ultramarin, Manganschwarz, Antimonschwarz, Manganviolett, Pariser Blau oder Schweinfurter Grün enthalten. Neben den anorganischen Pigmenten können die erfindungsgemäßen Dispersionsfarben auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten. Geeignet sind auch synthetische Weißpigmente mit Lufteinschlüssen zur Erhöhung der Lichtstreuung, wie die Rhopaque ®-Dispersionen.

Geeignete Füllstoffe sind z. B. Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc. In Anstrichmitteln werden naturgemäß feinteilige Füllstoffe bevorzugt. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum. Glänzende Anstrichmittel weisen in der Regel nur geringe Mengen sehr feinteiliger Füllstoffe auf.

Feinteilige Füllstoffe können auch zur Erhöhung der Deckkraft und /oder zur Einsparung von Weißpigmenten eingesetzt werden. Zur Einstellung der Deckkraft des Farbtons und der Farbtiefe werden vorzugsweise Abmischungen aus Farbpigmenten und Füllstoffen eingesetzt.

Das erfindungsgemäße Beschichtungsmittel (wässrige Anstrichmittel) kann neben der Polymerdispersion Pd) mit wenigstens einem erfindungsgemäßen hochverzweigten Polycarbonat als Zusatzstoff, gegebenenfalls zusätzlichen filmbildenden Polymeren und Pigment/Füllstoff weitere Hilfsmittel enthalten.

Zu den üblichen Hilfsmitteln zählen neben den bei der Polymerisation eingesetzten Emulgatoren, Netz- oder Dispergiermittel, wie Natrium-, Kalium- oder Ammoniumpolyphosphate, Alkalimetall- und Ammoniumsalze von Acrylsäure- oder Maleinsäureanhydridcopolymeren, Polyphosphonate, wie 1-Hydroxyethan-1,1-diphosphonsaures Natrium sowie Naphthalinsulfonsäuresalze, insbesondere deren Natriumsalze.

Weitere geeignete Hilfsmittel sind Verlaufsmittel, Entschäumer, Biozide und Verdicker. Geeignete Verdicker sind z. B. Assoziativverdicker, wie Polyurethanverdicker. Die Menge des Verdickers beträgt vorzugsweise weniger als 1 Gew.-%, besonders bevorzugt weniger als 0,6 Gew.-% Verdicker, bezogen auf den Feststoffgehalt des Anstrichmittels.

Die Herstellung der erfindungsgemäßen Anstrichmittel erfolgt in bekannter Weise durch Abmischen der Komponenten in hierfür üblichen Mischvorrichtungen. Es hat sich bewährt, aus den Pigmenten, Wasser und gegebenenfalls den Hilfsmitteln eine wässrige Paste oder Dispersion zu bereiten und anschließend erst das polymere Bindemittel, d. h. in der Regel die wässrige Dispersion des Polymeren mit der Pigmentpaste bzw. Pigmentdispersion zu vermischen.

Die erfindungsgemäßen Anstrichmittel enthalten in der Regel 30 bis 75 Gew.-% und vorzugsweise 40 bis 65 Gew.-% nichtflüchtige Bestandteile. Hierunter sind alle Bestandteile der Zubereitung zu verstehen, die nicht Wasser sind, zumindest aber die Gesamtmenge an Bindemittel, Pigment und Hilfsmittel, bezogen auf Feststoffgehalt des Anstrichmittels. Bei den flüchtigen Bestandteilen handelt es sich vorwiegend um Wasser.

Geeignete Anstrichmittel sind auch hochglänzende. Die Bestimmung des Glanzes des Anstrichmittels kann nach DIN 67530 erfolgen. Dazu wird das Anstrichmittel mit 240 µm Spaltweite auf eine Glasplatte aufgetragen und 72 Stunden lang bei Raumtemperatur getrocknet. Der Prüfkörper wird in ein kalibriertes Reflektometer eingesetzt, und bei definiertem Einfallswinkel wird festgestellt, inwieweit das zurückgeworfene Licht reflektiert oder gestreut worden ist. Der ermittelte Reflektometerwert ist ein Maß für den Glanz (je höher der Wert, desto höher der Glanz).

Das erfindungsgemäße Anstrichmittel kann in üblicher Weise auf Substrate aufgebracht werden, z. B. durch Streichen, Spritzen, Tauchen, Rollen, Rakeln etc.

Es wird vorzugsweise als Bautenanstrichmittel, d. h. zum Beschichten von Gebäuden oder Gebäudeteilen, verwendet. Es kann sich dabei um mineralische Untergründe wie Putze, Gips- oder Gipskartonplatten, Mauerwerk oder Beton, um Holz, Holzwerkstoffe, Metall oder Papier, z. B. Tapeten oder Kunststoff, z. B. PVC, handeln.

Vorzugsweise findet das Anstrichmittel für Gebäudeinnenteile, z. B. Innenwände, Innentüren, Vertäfelungen, Treppengeländer, Möbel etc., Verwendung. Vorzugsweise findet das Anstrichmittel auch für auch für Außenanwendungen wie Gartenzäune, Geländer, Holzteile etc. Anwendung.

Die erfindungsgemäßen Anstrichmittel zeichnen sich aus durch einfache Handhabung, gute Verarbeitungseigenschaften und hohes Deckvermögen. Die Anstrichmittel sind schadstoffarm. Sie haben gute anwendungstechnische Eigenschaften, z. B. eine gute Wasserfestigkeit, gute Nasshaftung, insbesondere auch auf Alkydfarben, gute Blockfestigkeit, eine gute Überstreichbarkeit, und sie zeigen beim Auftragen einen guten Verlauf. Das verwendete Arbeitsgerät lässt sich leicht mit Wasser reinigen.

Erfindungsgemäße Polymerdispersionen Pd) für einen Einsatz in Papierstreichmassen enthalten vorzugsweise ein Emulsionspolymerisat, das wenigstens ein Monomer M) oder eine Monomerenkombination einpolymerisiert enthält, das/die ausgewählt ist unter:
- C₁-C₁₀-Alkyl(meth)acrylaten und Mischungen davon,
- Mischungen aus wenigstens einem C₁-C₁₀-Alkyl(meth)acrylat und wenigstens einem Vinylaromaten, insbesondere Styrol,
- Mischungen aus wenigstens einem Vinylaromaten (insbesondere Styrol) und wenigstens einem Olefin, das ausgewählt unter C₂-C₈-Monoolefinen und nicht aromatischen Kohlenwasserstoffen mit mindestens zwei konjugierten Doppelbindungen (insbesondere Butadien).

Eine spezielle Ausführung des Emulsionspolymerisats sind Polybutadien-Bindemittel, die Butadien und einen Vinylaromaten, insbesondere Styrol, sowie gegebenenfalls wenigstes ein weiteres Monomer einpolymerisiert enthalten. Das Gewichtsverhältnis von Butadien zu Vinylaromaten beträgt z. B. 10 : 90 bis 90 : 10, vorzugsweise 20 : 80 bis 80 : 20.

Besonders bevorzugt sind Polybutadien-Bindemittel, wobei das Emulsionspolymerisat zu mindestens 40 Gew.-%, bevorzugt zu mindestens 60 Gew.-%, besonders bevorzugt zu mindestens 80 Gew.-%, insbesondere zu mindestens 90 Gew.-% aus Kohlenwasserstoffen mit zwei Doppelbindungen, insbesondere Butadien, oder Gemische von derartigen Kohlenwasserstoffen mit Vinylaromaten, insbesondere Styrol, besteht.

Eine weitere spezielle Ausführung des Emulsionspolymerisats sind Polyacrylat-Bindemittel, die wenigstens ein C₁-C₁₀-Alkyl(meth)acrylat oder eine Mischungen aus wenigstens einem C₁-C₁₀-Alkyl(meth)acrylat und wenigstens einem Vinylaromaten (insbesondere Styrol) einpolymerisiert enthalten.

Neben den Hauptmonomeren können die in den Polybutadien-Bindemitteln und den Polyacrylat-Bindemitteln enthaltenen Emulsionspolymerisate weitere Monomere enthalten, z. B. Monomere mit Carbonsäure-, Sulfonsäure- oder Phosphonsäuregruppen. Bevorzugt sind Monomere mit Carbonsäuregruppen, z. B. Acrylsäure, Methacrylsäure, Itaconsäure, Maleinsäure oder Fumarsäure und Aconitsäure. In einer bevorzugten Ausführungsform enthalten die Emulsionspolymerisate wenigstens eine ethylenisch ungesättigte Säure in einer Menge von 0,05 Gew.-% bis 5 Gew.-%, bezogen auf das Gesamtgewicht der eingesetzten Monomere, einpolymerisiert.

Weitere Monomere sind z. B. auch Hydroxylgruppen enthaltende Monomere, insbesondere C₁-C₁₀-Hydroxyalkyl(meth)acrylate, oder Amide wie (Meth)acrylamid.

Als Bestandteile enthalten Papierstreichmassen insbesondere
a) Bindemittel
b) gegebenenfalls einen Verdicker
c) gegebenenfalls einen Fluoreszenz- oder Phosphoreszenzfarbstoff, insbesondere als optischen Aufheller
d) Pigmente
e) weitere Hilfsstoffe, z. B. Verlaufshilfsmittel oder sonstige Farbstoffe.

Als Bindemittel wird die obige wässrige Polymerdispersion Pd), welche das Emulsionspolymerisat und die hochverzweigten Polycarbonate enthält, verwendet. Weitere Bindemittel, z. B. auch natürliche Polymere, wie Stärke, können mit verwendet werden. Vorzugsweise ist der Anteil der obigen wässrigen Polymerdispersion (gerechnet als Feststoff, d. h. Emulsionspolymerisat und hochverzweigte Polycarbonate, ohne Wasser) mindestens 50 Gew.-%, besonders bevorzugt mindestens 70 Gew.-% bzw. 100 Gew. %, bezogen auf die Gesamtmenge an Bindemittel.

Die Papierstreichmassen enthalten Bindemittel vorzugsweise in Mengen von 1 bis 50 Gew.-Teilen, besonders bevorzugt von 5 bis 20 Gew.-Teilen Bindemittel, bezogen auf 100 Gew.-Teilen Pigment.

Als Verdicker b) kommen neben synthetischen Polymerisaten, insbesondere Cellulosen, vorzugsweise Carboxymethylcellulose in Betracht.

Unter dem Begriff Pigment d) werden hier anorganische Feststoffe verstanden. Diese Feststoffe sind als Pigmente für die Farbe der Papierstreichmasse (insbesondere weiß) verantwortlich und/oder haben lediglich die Funktion eines inerten Füllstoffs. Bei dem Pigment handelt es sich im Allgemeinen um Weißpigmente, z. B. Bariumsulfat, Calciumcarbonat, Calciumsulfoaluminat, Kaolin, Talkum, Titandioxid, Zinkoxid, Kreide oder Streichclay oder Silikate.

Die Herstellung der Papierstreichmasse kann nach üblichen Methoden erfolgen.

Die erfindungsgemäßen Papierstreichmassen haben eine geringe Viskosität und eignen sich gut zur Beschichtung von z. B. Rohpapier oder Karton. Die Beschichtung und anschließende Trocknung kann nach üblichen Methoden erfolgen. Die beschichteten Papiere oder Kartone haben gute anwendungstechnische Eigenschaften, insbesondere sind sie auch gut in den bekannten Druckverfahren, wie Flexo-, Hoch-, Tief- oder Offsetdruck bedruckbar. Vor allem beim Offsetverfahren bewirken sie eine hohe Rupffestigkeit und eine schnelle und gute Farb- und Wasserannahme. Die mit den Papierstreichmassen beschichteten Papiere können gut in allen Druckverfahren, insbesondere im Offsetverfahren, verwendet werden.

Ein weiterer Gegenstand der Erfindung ist die Verwendung einer wässrigen Polymerdispersion Pd), wie zuvor definiert, als Klebrohstoff, zur Membranherstellung, als Binde- oder Hilfsmittel für Leder und Textilien, im Vliesstoffbereich, in Wasch- und Reinigungsmitteln, im Bausektor, zur Modifizierung von Kunststoffen, in hydraulisch abbindenden Massen, als Komponenten für Tonerformulierungen oder als Zusatzstoff in elektrophotographischen Anwendungen.

Die Erfindung wird anhand der folgenden nicht einschränkenden Beispiele näher erläutert.

### Beispiele:

### I. Synthese der hochverzweigten Polymere

Einsatzstoffe:
Polyol 1: Reaktionsprodukt aus Trimethylolpropan und 12-fach molarem Überschuss Ethylenoxid.
DBTL: Di-n-butylzinndilaurat
Nouracid HE30: Fettsäuregemisch des Sonnenblumenöls; Produkt der OLEON GmbH, D-46446 Emmerich.
Nouracid LE80: Fettsäuregemisch des Leinöls; Produkt der OLEON GmbH, D-46446 Emmerich.

Die hyperverzweigten Polymere wurden per Gelpermeationschromatographie mit einem Refraktometer als Detektor analysiert. Als mobile Phase wurde Dimethylacetamid verwendet, als Standard zur Bestimmung des Molekulargewichts wurde Polymethylmethacrylat (PMMA) eingesetzt.

Die Bestimmung der Jodzahl erfolgte nach Kaufmann. Die Säurezahl wurde nach DIN 53402 bestimmt. Die Hydroxylzahl wurde nach DIN 53240, Teil 2 bestimmt.

### Vergleichsbeispiel 1

### Synthese eines hyperverzweigten Polycarbonats ohne ungesättigte Fettsäure

In einem 5L HWS-Gefäß mit Rührer, Rückflusskühler, Innenthermometer und Stickstoffeinleitung wurden 3350,0 g (5,00 Mol) Polyol 1 und 590,7 g (5,00 Mol) Diethylcarbonat vorgelegt und das Gemisch durch Zugabe von 0,5 g Kaliumhydroxid auf den pH-Wert 9 eingestellt. Das Reaktionsgemisch wurde unter Rühren langsam zum Rückfluss erhitzt und die siedende Reaktionsmischung so lange gerührt, bis die Siedetemperatur des Reaktionsgemisches von 140 °C auf eine Temperatur von 110 °C gefallen war. Nun wurde der Rückflusskühler durch einen absteigenden Kühler mit Auffanggefäß ersetzt und die im Reaktionsgemisch befindlichen niedrig siedenden Anteile abdestilliert, wobei die Temperatur des Reaktionsgemisches bis auf 200 °C erhöht wurde. Das Destillat wurde gesammelt, ausgewogen und der Umsatz so gegenüber dem theoretisch möglichen Vollumsatz prozentual ermittelt. Nach Erreichen eines Umsatzes von 88 % (405 g Destillat) wurde das Reaktionsgemisch abgekühlt und durch Zugabe von 85%iger Phosphorsäure auf einen pH-Wert von 6 eingestellt. Nachfolgend wurde die Reaktionsmischung auf 140 °C erhitzt und bei einem Vakuum von 40 mbar für 10 min gerührt, um verbliebene flüchtige Bestandteile zu entfernen.

Das hyperverzweigte Polycarbonat wurde wie folgt charakterisiert: Mn = 2750 g/Mol, Mw = 5660 g/Mol, OH-Zahl = 151 mg KOH/g Polymer.

### Beispiel 2:

### Synthese eines hyperverzweigten Polycarbonats mit Linolsäureresten

In einem 1000mL Vierhalskolben mit Rührer, Rückflusskühler, Innenthermometer und Stickstoffleitung wurden 508,4 g (0,759 Mol) Polyol 1 und 122,2 g (1,035 Mol) Diethylcarbonat vorgelegt und das Gemisch durch Zugabe von Kaliumhydroxid auf den pH-Wert 9 eingestellt. Das Reaktionsgemisch wurde unter Rühren langsam zum Rückfluss erhitzt und die siedende Reaktionsmischung so lange gerührt, bis die Siedetemperatur des Reaktionsgemisches von 130 °C auf eine Temperatur von 112 °C gefallen war. Nun wurde der Rückflusskühler durch einen absteigenden Kühler mit Auffanggefäß ersetzt und die im Reaktionsgemisch befindlichen niedrig siedenden Anteile abdestilliert, wobei die Temperatur des Reaktionsgemisches bis auf 180 °C erhöht wurde. Das Destillat wurde gesammelt, ausgewogen und der Umsatz so gegenüber dem theoretisch möglichen Vollumsatz prozentual ermittelt. Nach dem Erreichen eines Umsatzes von 59 % (55,8 g Destillat) wurde das Reaktionsgemisch abgekühlt und 19,3 g (0,069 Mol) Nouracid HE30 und ein Tropfen DBTL zugegeben. Die Reaktion wurde erneut erwärmt und für einen Zeitraum von 4 h bei 200 °C gerührt. Dann wurde die Reaktion abgekühlt und durch Zugabe von 85%iger Phosphorsäure auf einen pH-Wert von 6 eingestellt. Nachfolgend wurde die Reaktionsmischung auf 140 °C erhitzt und bei einem Vakuum von 100 mbar für 1 h gerührt, um verbliebene flüchtige Bestandteile zu entfernen.

Das hyperverzweigte Polycarbonat mit Linolsäureresten wurde wie folgt charakterisiert: Mn = 3090 g/Mol, Mw = 8640 g/Mol, Säurezahl = 3 mg KOH/g Polymer, Jodzahl = 4,3g lod/100g Polymer.

### Beispiel 3:

### Synthese eines hyperverzweigten Polycarbonats mit Linolensäureresten

In einem 1000mL Vierhalskolben mit Rührer, Rückflusskühler, Innenthermometer und Stickstoffleitung wurden 508,5 g (0,759 Mol) Polyol 1 und 122,3 g (1,035 Mol) Diethylcarbonat vorgelegt und das Gemisch durch Zugabe von Kaliumhydroxid auf den pH-Wert 9 eingestellt. Das Reaktionsgemisch wurde unter Rühren langsam zum Rückfluss erhitzt und die siedende Reaktionsmischung so lange gerührt, bis die Siedetemperatur des Reaktionsgemisches von 130 °C auf eine Temperatur von 112 °C gefallen war. Nun wurde der Rückflusskühler durch einen absteigenden Kühler mit Auffanggefäß ersetzt und die im Reaktionsgemisch befindlichen niedrig siedenden Anteile abdestilliert, wobei die Temperatur des Reaktionsgemisches bis auf 180 °C erhöht wurde. Das Destillat wurde gesammelt, ausgewogen und der Umsatz so gegenüber dem theoretisch möglichen Vollumsatz prozentual ermittelt. Nach dem Erreichen eines Umsatzes von 58 % (56 g Destillat) wurde das Reaktionsgemisch abgekühlt und 19,2 g (0,069 Mol) Nouracid LE80 und ein Tropfen DBTL zugegeben. Die Reaktion wurde erneut erwärmt und für einen Zeitraum von 4 h bei 200 °C gerührt. Dann wurde die Reaktion abgekühlt und durch Zugabe von 85%iger Phosphorsäure auf einen pH-Wert von 6 eingestellt. Nachfolgend wurde die Reaktionsmischung auf 140 °C erhitzt und bei einem Vakuum von 100 mbar für 30 min gerührt, um verbliebene flüchtige Bestandteile zu entfernen.

Das hyperverzweigte Polycarbonat mit Linolensäureresten wurde wie folgt charakterisiert: Mn = 3270 g/Mol, Mw = 8070 g/Mol, Säurezahl = 4 mg KOH/g Polymer, Jodzahl = 6,4 g lod/100 g Polymer.

### Beispiel 4:

### Synthese eines hyperverzweigten Polycarbonats mit Linolsäureresten

In einem 500mL Vierhalskolben mit Rührer, Rückflusskühler, Innenthermometer und Stickstoffleitung wurden 238,2 g (0,356 Mol) Polyol 1 und 57,3 g (0,485 Mol) Diethylcarbonat vorgelegt und das Gemisch durch Zugabe von Kaliumhydroxid auf den pH-Wert 9 eingestellt. Das Reaktionsgemisch wurde unter Rühren langsam zum Rückfluss erhitzt und die siedende Reaktionsmischung so lange gerührt, bis die Siedetemperatur des Reaktionsgemisches von 130 °C auf eine Temperatur von 112 °C gefallen war. Nun wurde der Rückflusskühler durch einen absteigenden Kühler mit Auffanggefäß ersetzt und die im Reaktionsgemisch befindlichen niedrig siedenden Anteile abdestilliert, wobei die Temperatur des Reaktionsgemisches bis auf 180 °C erhöht wurde. Das Destillat wurde gesammelt, ausgewogen und der Umsatz so gegenüber dem theoretisch möglichen Vollumsatz prozentual ermittelt. Nach dem Erreichen eines Umsatzes von 55 % (24,4 g Destilllat) wurde das Reaktionsgemisch abgekühlt und 4,5 g (0,016 Mol) Nouracid HE30 und ein Tropfen DBTL zugegeben. Die Reaktion wurde erneut erwärmt und für einen Zeitraum von 4 h bei 200 °C gerührt. Bei einem Umsatz von 75 % (33,6 g Destillat) wurde die Reaktion abgekühlt und durch Zugabe von 85%iger Phosphorsäure auf einen pH-Wert von 6 eingestellt. Nachfolgend wurde die Reaktionsmischung auf 140 °C erhitzt und bei einem Vakuum von 100 mbar für 1 h gerührt, um verbliebene flüchtige Bestandteile zu entfernen.

Das hyperverzweigte Polycarbonat mit Linolsäureresten wurde wie folgt charakterisiert: Mn = 4000 g/Mol, Mw = 20000 g/Mol, Säurezahl = 1 mg KOH/g Polymer; Jodzahl = 3,6 g lod/100 g Polymer.

### Beispiel 5:

### Synthese eines hyperverzweigten Polycarbonats mit Linolensäureresten

In einem 1000mL Vierhalskolben mit Rührer, Rückflusskühler, Innenthermometer und Stickstoffleitung wurden 487 g (0,727 Mol) Polyol 1 und 117 g (0,99 Mol) Diethylcarbonat vorgelegt und das Gemisch durch Zugabe von Kaliumhydroxid auf den pH-Wert 9 eingestellt. Das Reaktionsgemisch wurde unter Rühren langsam zum Rückfluss erhitzt und die siedende Reaktionsmischung so lange gerührt, bis die Siedetemperatur des Reaktionsgemisches von 130 °C auf eine Temperatur von 112 °C gefallen war. Nun wurde der Rückflusskühler durch einen absteigenden Kühler mit Auffanggefäß ersetzt und die im Reaktionsgemisch befindlichen niedrig siedenden Anteile abdestilliert, wobei die Temperatur des Reaktionsgemisches bis auf 180 °C erhöht wurde. Das Destillat wurde gesammelt, ausgewogen und der Umsatz so gegenüber dem theoretisch möglichen Vollumsatz prozentual ermittelt. Nach dem Erreichen eines Umsatzes von 60 % (55 g Destillat) wurde das Reaktionsgemisch abgekühlt und 46 g (0,165 Mol) Nouracid LE80 und ein Tropfen DBTL zugegeben. Die Reaktion wurde erneut erwärmt und für einen Zeitraum von 4 h bei 200 °C gerührt bis die Säurezahl auf 4 mg KOH/ g Polymer gefallen war. Dann die Reaktion abgekühlt und durch Zugabe von 85%iger Phosphorsäure auf einen pH-Wert von 6 eingestellt. Nachfolgend wurde die Reaktionsmischung auf 140°C erhitzt und bei einem Vakuum von 100 mbar für 1 h gerührt, um verbliebene flüchtige Bestandteile zu entfernen.

Das hyperverzweigte Polycarbonat mit Linolensäureresten wurde wie folgt charakterisiert: Mn = 2510 g/Mol, Mw = 7160 g/Mol, Säurezahl = 4 mg KOH/g Polymer; Jodzahl = 15,0 g lod/100 g Polymer.

### II. Herstellung von Polymerdispersionen

### Beispiel 5: Herstellung der Dispersion I

In einem mit Dosiervorrichtung und Temperaturregelung ausgerüsteten Polymerisationsgefäß wurden vorgelegt:
Vorlage:

| | |
|---|---|
| 528,0 g | Wasser |
| 46,7 g | einer Polystyrolsaatdispersion mit einem Feststoffgehalt von 33 % und einer mittleren Teilchengröße von 30 nm |
| 3,67 g | einer 15%igen wässrigen Lösung von Natriumlaurylsulfat |

Danach wurde unter Rühren auf 85 °C erhitzt. Anschließend wurden unter Aufrechterhaltung dieser Temperatur 5 Gew.-% von Zulauf 2 zugegeben und 5 min gerührt. Danach wurde Zulauf 1 in 180 min zudosiert und parallel dazu die Restmenge von Zulauf 2 in 195 min.
Zulauf 1:

| | |
|---|---|
| 543,2 g | Wasser |
| 125,4 g | einer 15%igen wässrigen Lösung von Natriumlaurylsulfat |
| 458,0 g | n-Butylacrylat |
| 399,6 g | Methylmethacrylat |
| 165,1 g | Styrol |
| 22,78 g | Methacrylsäure |
| 21,45 g | Ureidomethacrylat (N-(2-Methacryloxyethyl)imidazolidin-2-on) |
| 33,0 g | Bisomer MPEG 350 MA (Methoxypolyethylenglykolmonomethacrylat der Fa. Laporte Performance Chemicals UK) |

Zulauf 2:

| | |
|---|---|
| 83,6 g | Wasser |
| 4,4 g | Natriumperoxodisulfat |

Nach Beendigung von Zulauf 1 wurden 22 g Wasser zugegeben; nach Beendigung von Zulauf 2 wurde 30 min nachpolymerisiert und mit 7,47 g Ammoniak (25%ige wässrige Lösung) neutralisiert. Danach wurde 13,2 g Wasserstoffperoxid (5%ige wässrige Lösung) zugegeben und eine Lösung von 0,557 g Ascorbinsäure in 4,96 g Wasser in 60 min zudosiert. Danach ließ man die Dispersion abkühlen und filtrierte über einen 125 µm-Filter. Es wurden 2,48 kg einer 46%igen Dispersion erhalten.

### III. Anwendungstechnische Beispiele

### 1. Bestimmung der Pendelhärte

Die Acrylatdispersion I wurde ohne Zusatz eingesetzt oder jeweils im Verhältnis 95 : 5 (bezogen auf Gesamtfestgewicht der Dispersion und festes hyperverzweigtes Polymer) mit hyperverzweigten Polymeren wie in der Tabelle 1 angegeben vermischt. Anschließend wurden reine Bindemittelfilme (Schichtdicke nass: 250 µm) auf ein Substrat aufgetragen und die Entwicklung der Pendelhärte nach König (bestimmt nach DIN 53157) in Abhängigkeit von der Zeit verfolgt. Die Ergebnisse sind in Tabelle 1 zusammengefasst.

**Tabelle 1: Zusatz von hyperverzweigtem Polymer zu Acrylatdispersion 1:**

| Acrylatdispersion I | Pendelhärte | | |
|---|---|---|---|
| | 3 h | 8 h | 24 h |
| + oxidativ vernetzbares hyperverzweigtes Polymer aus Bsp. 2 | 21 | 21 | 21 |
| + oxidativ vernetzbares hyperverzweigtes Polymer aus Bsp. 3 | 21 | 21 | 20 |
| + oxidativ vernetzbares hyperverzweigtes Polymer aus Bsp. 4 | 21 | 22 | 21 |
| + nicht oxidativ vernetzbares hyperverzweigtes Polymer aus Vergleichsbsp. 1 | 12 | 13 | 11 |
| + Boltorn U3000 (Vergleich)^{*)} | 8 | 12 | 12 |

| | | | |
|---|---|---|---|
| ^{*)} kommerzielles Fettsäure-modifiziertes dendritisches Polymer mit ungesättigten Gruppen, Molekulargewicht 6500 g/mol (Perstorp AB) | | | |

Man sieht, dass bei Zugabe von oxidativ vernetzbaren hyperverzweigten Polymeren eine schnellere Härteentwicklung und eine höhere Endhärte erzielt werden.

### 2. Herstellung von wässrigen Lacken

Die einzelnen Komponenten (Herstellernachweis s. Tabelle 2) wurden in der Menge (Gewichtsteile) und Reihenfolge, wie in Tabelle 3 angegeben, unter Rühren mit einem Zahnscheibenrührer zudosiert. Nach Zugabe des Titandioxidpigments wurde die Drehzahl auf 2000 Upm erhöht und so lange dispergiert, bis die Pigmentpaste glatt, d. h. frei von Klümpchen, war. Dann ließ man, falls erforderlich, auf Raumtemperatur Abkühlen und gab die restlichen Komponenten bei reduzierter Drehzahl zu.

**Tabelle 2:**

| Funktion | Name | Hersteller |
|---|---|---|
| Dispergiermittel | Disperbyk^{®} 190 (hochmolekulares Blockcopolymer mit pigmentaktiven Gruppen) | Byk-Chemie GmbH, Wesel |
| Entschäumer | Byk^{®} 020 (Polysiloxan) | Byk-Chemie GmbH, Wesel |
| | Tego Airex^{®} 902W (kieselsäurehaltiges Poly(ethersiloxan)-Copolymer | Tego Chemie, Essen |
| Titandioxidpigment | Kronos^{®} 2190 | Kronos Titan GmbH, Leverkusen |
| Verdicker | DSX 2000 und DSX 1514 (Assoziativ-Verdicker auf Polyurethanbasis) | Cognis Deutschland GmbH & Co. KG, Düsseldorf |

**Tabelle 3: Formulierung der Pigmentpaste**

| Komponente | Name | Menge [g] |
|---|---|---|
| Wasser | | 53,6 |
| Entschäumer | Byk^{®} 020 | 4,8 |
| Dispergiermittel | Disperbyk^{®} 190 | 23,6 |
| Verdicker | DSX 2000/1514 (1:0.3) | 12,3 |
| Titandioxidpigment | Kronos^{®} 2190 | 235,8 |

**Tabelle 4: Zusammensetzung des Lackes**

| Komponente | Name | Menge [g] |
|---|---|---|
| Pigmentpaste aus Tabelle 3 | | 355,1 |
| Wasser | | 26,3 |
| Lösungsmittel | Propylenglykol | 21,8 |
| Bindemittel | wässrige Acrylatdispersion aus Beispiel 5 + ggf. zugemischte oxidativ vernetzbare hyperver-zweigte Polymere (siehe Tabelle 5) | 621,9 |

### 3. Prüfung der wässrigen Lacke (Beschichtungsmittel)

**Tabelle 5:**

| Farbe auf Basis Acrylatdispersion I | Pendelhärte | | | |
|---|---|---|---|---|
| | 3h | 8h | 24h | 72h |
| ohne Zusatz (Vergleich) | 7 | 8 | 12 | 17 |
| + nicht oxidativ vernetzbares hyperverzweigtes Polymer aus Vergleichsbsp. 1 | 7 | 8 | 12 | 13 |
| + oxidativ vernetzbares hyperverzweigtes Polymer aus Bsp. 2 | 8 | 10 | 17 | 27 |
| + oxidativ vernetzbares hyperverzweigtes Polymer aus Bsp. 4 | 28 | 30 | 31 | 31 |

Farben mit/ohne Sikkativ:

**Tabelle 6:**

| Farbe auf Basis Acrylatdispersion I | Pendelhärte | | | |
|---|---|---|---|---|
| | 3 h | 7 h | 24 h | 72 h |
| + oxidativ vernetzbares hyperverzweigtes Polymer aus Bsp. 5 | 10 | 10 | 21 | 18 |
| + oxidativ vernetzbares hyperverzweigtes Polymer aus Bsp. 5 + 0.03 Nuodex Cobalt 10 | 10 | 13 | 17 | 26 |
| + oxidativ vernetzbares hyperverzweigtes Polymer aus Bsp. 2 | 11 | 11 | 20 | 21 |
| + oxidativ vernetzbares hyperverzweigtes Polymer aus Bsp. 2 + 0.03 Nuodex Cobalt 10 | 11 | 13 | 17 | 28 |

Mittels Zusatz von Sikkativen kann eine zusätzliche Erhöhung der Endhärte erzielt werden.

## Patentansprüche

1. Wässrige Polymerdispersion Pd), enthaltend:
- ein Emulsionspolymerisat wenigstens eines α,β-ethylenisch ungesättigten Monomers M) und
- wenigstens ein hochverzweigtes Polycarbonat, das wenigstens einen C₈- bis C₃₂-Alkenylrest mit mindestens einer Kohlenstoff-Kohlenstoff-Doppelbindung umfasst.

2. Polymerdispersion nach Anspruch 1, wobei das hochverzweigte Polycarbonat wenigstens einen C₈- bis C₃₂₋Alkenylrest mit mindestens zwei Kohlenstoff-Kohlenstoff-Doppelbindungen umfasst.

3. Polymerdispersion nach einem der vorhergehenden Ansprüche, enthaltend wenigstens ein hochverzweigtes Polycarbonat, das durch Umsetzung von wenigstens einem organischen Carbonat (A) mit wenigstens einem mindestens trifunktionellen Alkohol (B) und wenigstens einer Verbindung (C) erhältlich ist, wobei die Verbindung (C)
- einen C₈- bis C₃₂-Alkenylrest mit mindestens einer Kohlenstoff-Kohlenstoff-Doppelbindung und
- eine gegenüber Hydroxylgruppen oder Carbonatgruppen reaktive funktionelle Gruppe aufweist.

4. Polymerdispersion nach einem der vorhergehenden Ansprüche, enthaltend wenigstens ein hochverzweigtes Polycarbonat, das einen Verzweigungsgrad DB von 10 bis 95 %, bevorzugt 25 bis 90 %, insbesondere 30 bis 80 %, aufweist.

5. Polymerdispersion nach einem der vorhergehenden Ansprüche, wobei das Monomer M) ausgewählt ist unter Estern α,β-ethylenisch ungesättigter Mono- und Dicarbonsäuren mit C₁-C₂₀-Alkanolen, Vinylaromaten, Estern von Vinylalkohol mit C₁-C₃₀-Monocarbonsäuren, ethylenisch ungesättigten Nitrilen, Vinylhalogeniden, Vinylidenhalogeniden, monoethylenisch ungesättigten Carbon- und Sulfonsäuren, phosphorhaltigen Monomeren, Estern α,β-ethylenisch ungesättigter Mono- und Dicarbonsäuren mit C₂-C₃₀-Alkandiolen, Amiden α,β-ethylenisch ungesättigter Mono- und Dicarbonsäuren mit C₂-C₃₀-Aminoalkoholen, die eine primäre oder sekundäre Aminogruppe aufweisen, primären Amiden α,β-ethylenisch ungesättigter Monocarbonsäuren und deren N-Alkyl- und N,N-Dialkylderivaten, N-Vinyllactamen, offenkettigen N-Vinylamidverbindungen, Estern von Allylalkohol mit C₁-C₃₀-Monocarbonsäuren, Estern von α,β-ethylenisch ungesättigten Mono- und Dicarbonsäuren mit Aminoalkoholen, Amiden α,β-ethylenisch ungesättigten Mono- und Dicarbonsäuren mit Diaminen, welche mindestens eine primäre oder sekundäre Aminogruppe aufweisen, N,N-Diallylaminen, N,N-Diallyl-N-alkylaminen, Vinyl- und Allyl-substituierten Stickstoffheterocyclen, Vinylethern, C₂-C₈-Monoolefinen, nicht aromatischen Kohlenwasserstoffen mit mindestens zwei konjugierten Doppelbindungen, Polyether(meth)acrylaten, Harnstoffgruppen aufweisenden Monomeren, Vinylmonomeren mit vernetzenden Gruppen und Mischungen davon.

6. Polymerdispersion nach einem der vorgehenden Ansprüche, wobei zur Herstellung des Emulsionspolymerisats, bezogen auf das Gesamtgewicht der eingesetzten Monomere, mindestens 40 Gew.-%, bevorzugt mindestens 60 Gew.-%, besonders bevorzugt mindestens 80 Gew.-%, wenigstens eines Monomers M1) eingesetzt werden, das ausgewählt ist unter Estern α,β-ethylenisch ungesättigter Mono- und Dicarbonsäuren mit C₁-C₂₀-Alkanolen, Vinylaromaten, Estern von Vinylalkohol mit C₁-C₃₀-Monocarbonsäuren, ethylenisch ungesättigten Nitrilen, Vinylhalogeniden, Vinylidenhalogeniden und Mischungen davon.

7. Polymerdispersion nach Anspruch 6, wobei zusätzlich zur Herstellung des Emulsionspolymerisats, bezogen auf das Gesamtgewicht der eingesetzten Monomere, bis zu 60 Gew.-%, bevorzugt bis zu 40 Gew.-%, besonders bevorzugt bis zu 20 Gew.-% wenigstens eines Monomers M2) eingesetzt werden, das ausgewählt ist unter ethylenisch ungesättigten Mono- und Dicarbonsäuren und den Anhydriden und Halbestern ethylenisch ungesättigter Dicarbonsäuren, (Meth)acrylamiden, C₁-C₁₀-Hydroxyalkyl(meth)acrylaten, C₁-C₁₀-Hydroxyalkyl(meth)acrylamiden, Polyether(meth)acrylaten, Harnstoffgruppen aufweisenden Monomeren, Acetoacetoxyalkyl(meth)arylaten, Acetoacetoxyalkyl(meth)acrylamiden und Mischungen davon.

8. Anstrichmittel, enthaltend
- eine wässrige Polymerdispersion Pd), wie in einem der Ansprüche 1 bis 7 definiert,
- gegebenenfalls wenigstens ein Pigment,
- gegebenenfalls wenigstens einen Füllstoff,
- gegebenenfalls weitere Hilfsmittel, und
- Wasser.

9. Anstrichmittel nach Anspruch 8 in Form eines Klarlacks oder Anstrichmittel in Form einer Dispersionsfarbe.

10. Verfahren zur Herstellung eines hochverzweigten Polycarbonats, das wenigstens einen C₈- bis C₃₂-Alkenylrest mit mindestens einer Kohlenstoff-Kohlenstoff-Doppelbindung umfasst, bei dem man wenigstens ein organisches Carbonat (A) mit wenigstens einem mindestens trifunktionellen Alkohol (B) und wenigstens einer Verbindung (C) umsetzt, ausgewählt unter C₈- bis C₃₂-Monocarbonsäuren mit mindestens einer Kohlenstoff-Kohlenstoff-Doppelbindung oder Derivate davon, ausgewählt unter Anhydride, Halogenide und Ester.

11. Verfahren nach Anspruch 10, bei dem man
a) wenigstens ein organisches Carbonat (A) mit wenigstens einem mindestens trifunktionellen Alkohol (B) unter Eliminierung von Alkoholen zu einem Kondensationsprodukt (K) umsetzt,
b) das Kondensationsprodukt (K) weiter unter Eliminierung von Alkoholen zu einem hochverzweigten Polycarbonat (P) umsetzt, wobei zumindest ein Teil der eliminierten Alkohole aus dem Reaktionsgemisch entfernt wird,
wobei zur Umsetzung in Schritt b) zusätzlich wenigstens eine Verbindung (C) eingesetzt wird, die einen C₈- bis C₃₂-Alkenylrest mit mindestens einer Kohlenstoff-Kohlenstoff-Doppelbindung und eine gegenüber Hydroxylgruppen oder Carbonatgruppen reaktive funktionelle Gruppe aufweist und/oder das hochverzweigte Polycarbonat (P) im Anschluss an Schritt b) mit wenigstens einer Verbindung (C) umgesetzt wird, wobei als Verbindung (C) wenigstens eine C₈- bis C₃₂-Monocarbonsäure eingesetzt wird, die ausgewählt ist aus Palmitoleinsäure, Ölsäure, Linolsäure, Linolensäure, Elaostearinsäure, Fettsäuren aus Leinöl, Fettsäuren aus Sojaöl, Fettsäuren aus Baumwollsaatöl, Fettsäuren aus Sonnenblumenöl, Fettsäuren aus Safloröl, Fettsäuren aus Rizinusöl, Fettsäuren aus Fischöl, Fettsäuren aus Kokosfett, Fettsäuren aus Palmkernöl, Fettsäuren aus Rapsöl, Fettsäuren aus Oiticicaöl, Fettsäuren aus Holzöl, Fettsäuren aus Ricinenöl, Fettsäuren aus Tallöl, Fettsäuren aus Mohnöl, Fettsäuren aus Nussöl, Fettsäuren aus Hanföl und Derivaten und Mischungen davon.

12. Hochverzweigtes Polycarbonat, erhalten durch ein Verfahren, bei dem man wenigstens ein organisches Carbonat (A) mit wenigstens einem mindestens trifunktionellen Alkohol (B) und wenigstens einer Verbindung (C) umsetzt, ausgewählt unter C₈- bis C₃₂-Monocarbonsäuren mit mindestens einer Kohlenstoff-Kohlenstoff-Doppelbindung oder Derivate davon, ausgewählt unter Anhydride, Halogenide und Ester.

13. Verfahren zur Herstellung einer wässrigen Polymerdispersion Pd), durch radikalische Emulsionspolymerisation wenigstens eines Monomers M), bei dem vor und/oder während und/oder nach der Emulsionspolymerisation wenigstens ein hochverzweigtes Polycarbonat, wie in einem der Ansprüche 1 bis 4 definiert, oder erhältlich durch ein Verfahren, wie in einem der Ansprüche 10 bis 11 definiert, zugegeben wird.

14. Verwendung wenigstens eines hochverzweigten Polycarbonats, wie in einem der Ansprüche 1 bis 4 definiert, oder erhältlich durch ein Verfahren, wie in einem der Ansprüche 10 bis 11 definiert, als Additiv für ein Beschichtungsmittel, das ein Emulsionspolymerisat auf Basis wenigstens eines ethylenisch ungesättigten Monomers M) enthält, zur Verbesserung der Härteentwicklung der daraus hergestellten Beschichtungen.

15. Verwendung wenigstens eines hochverzweigten Polycarbonats, wie in einem der Ansprüche 1 bis 4 definiert, oder erhältlich durch ein Verfahren, wie in einem der Ansprüche 10 bis 11 definiert, als Additiv für ein Beschichtungsmittel, das ein Emulsionspolymerisat auf Basis wenigstens eines ethylenisch ungesättigten Monomers M) enthält, zur Erhöhung der Endhärte der daraus hergestellten Beschichtungen.

## Claims

1. An aqueous polymer dispersion Pd) comprising:
- an emulsion polymer of at least one **α,β-**ethylenically unsaturated monomer M), and
- at least one highly branched polycarbonate which comprises at least one C₈ to C₃₂ alkenyl radical having at least one carbon-carbon double bond.

2. The polymer dispersion according to claim 1, wherein the highly branched polycarbonate comprises at least one C₈ to C₃₂ alkenyl radical having at least two carbon-carbon double bonds.

3. The polymer dispersion according to either of the preceding claims, comprising at least one highly branched polycarbonate, obtainable by reacting at least one organic carbonate (A) with at least one at least trifunctional alcohol (B) and at least one compound (C), the compound (C) having
- a C₈ to C₃₂ alkenyl radical having at least one carbon-carbon double bond, and
- a functional group that is reactive toward hydroxyl groups or carbonate groups.

4. The polymer dispersion according to any of the preceding claims, comprising at least one highly branched polycarbonate, having a degree of branching, DB, of 10% to 95%, preferably 25% to 90%, more particularly 30% to 80%.

5. The polymer dispersion according to any of the preceding claims, the monomer M) being selected from esters of **α,β**-ethylenically unsaturated monocarboxylic and dicarboxylic acids with C₁-C₂₀ alkanols, vinylaromatics, esters of vinyl alcohol with C₁-C₃₀ monocarboxylic acids, ethylenically unsaturated nitriles, vinyl halides, vinylidene halides, monoethylenically unsaturated carboxylic and sulfonic acids, phosphorus monomers, esters of **α,β**-ethylenically unsaturated monocarboxylic and dicarboxylic acids with C₂-C₃₀ alkanediols, amides of **α,β**-ethylenically unsaturated monocarboxylic and dicarboxylic acids with C₂-C₃₀ amino alcohols which contain a primary or secondary amino group, primary amides of **α,β**-ethylenically unsaturated monocarboxylic acids and their N-alkyl and N,N-dialkyl derivatives, N-vinyllactams, open-chain N-vinylamide compounds, esters of allyl alcohol with C₁-C₃₀ monocarboxylic acids, esters of **α,β**-ethylenically unsaturated monocarboxylic and dicarboxylic acids with amino alcohols, amides of **α,β**-ethylenically unsaturated monocarboxylic and dicarboxylic acids with diamines which contain at least one primary or secondary amino group, N,N-diallylamines, N,N-diallyl-N-alkylamines, vinyl- and allyl- substituted nitrogen heterocycles, vinyl ethers, C₂-C₈ monoolefins, nonaromatic hydrocarbons having at least two conjugated double bonds, polyether (meth)acrylates, monomers containing urea groups, vinyl monomers having crosslinking groups, and mixtures thereof.

6. The polymer dispersion according to any of the preceding claims, the emulsion polymer being prepared using, based on the total weight of the monomers employed, at least 40%, preferably at least 60%, more preferably at least 80%, by weight of at least one monomer M1) selected from esters of **α,β**-ethylenically unsaturated monocarboxylic and dicarboxylic acids with C₁-C₂₀ alkanols, vinylaromatics, esters of vinyl alcohol with C₁-C₃₀ monocarboxylic acids, ethylenically unsaturated nitriles, vinyl halides, vinylidene halides, and mixtures thereof.

7. The polymer dispersion according to claim 6, the emulsion polymer being prepared using additionally, based on the total weight of the monomers employed, up to 60%, preferably up to 40%, more preferably up to 20%, by weight of at least one monomer M2) selected from ethylenically unsaturated monocarboxylic and dicarboxylic acids and the anhydrides and monoesters of ethylenically unsaturated dicarboxylic acids, (meth)acrylamides, C₁-C₁₀ hydroxyalkyl (meth) acrylates, C₁-C₁₀ hydroxyalkyl(meth)acrylamides, polyether (meth)acrylates, monomers containing urea groups, acetoacetoxyalkyl (meth)acrylates, acetoacetoxyalkyl(meth)acrylamides, and mixtures thereof.

8. A coating material comprising
- an aqueous polymer dispersion Pd) as defined in any of claims 1 to 7,
- optionally at least one pigment,
- optionally at least one filler,
- optionally further auxiliaries, and
- water.

9. The coating material according to claim 8 in the form of a clear varnish or coating material in the form of an emulsion paint.

10. A process for preparing a highly branched polycarbonate which comprises at least one C₈ to C₃₂ alkenyl radical having at least one carbon-carbon double bond, which involves reacting at least one organic carbonate (A) with at least one at least trifunctional alcohol (B) and at least one compound (C), selected from C₈ to C₃₂ monocarboxylic acids having at least one carbon-carbon double bond, or derivatives thereof, selected from anhydrides, halides, and esters.

11. The process according to claim 10, involving
a) reacting at least one organic carbonate (A) with at least one at least trifunctional alcohol (B), with elimination of alcohols to give a condensation product (K),
b) reacting the condensation product (K) further, with elimination of alcohols to give a highly branched polycarbonate (P), at least part of the eliminated alcohols being removed from the reaction mixture,
with the additional use, for the reaction in step b), of at least one compound (C) which has a C₈ to C₃₂ alkenyl radical having at least one carbon-carbon double bond, and a functional group that is reactive toward hydroxyl groups or carbonate groups, and/or reacting the highly branched polycarbonate (P), subsequent to step b), with at least one compound (C), involving using as compound (C) at least one C₈ to C₃₂ monocarboxylic acid selected from palmitoleic acid, oleic acid, linoleic acid, linolenic acid, eleostearic acid, fatty acids from linseed oil, fatty acids from soybean oil, fatty acids from cottonseed oil, fatty acids from sunflower oil, fatty acids from safflower oil, fatty acids from castor oil, fatty acids from fish oil, fatty acids from coconut fat, fatty acids from palm kernel oil, fatty acids from rapeseed oil, fatty acids from oiticica oil, fatty acids from tung oil, fatty acids from ricinene oil, fatty acids from tall oil, fatty acids from poppy oil, fatty acids from nut oil, fatty acids from hemp oil, and derivatives and mixtures thereof.

12. A highly branched polycarbonate obtained using a process which involves reacting at least one organic carbonate (A) with at least one at least trifunctional alcohol (B) and at least one compound (C), selected from C₈ to C₃₂ monocarboxylic acids having at least one carbon-carbon double bond, or derivatives thereof, selected from anhydrides, halides, and esters.

13. A process for preparing an aqueous polymer dispersion Pd) by free-radical emulsion polymerization of at least one monomer M), which involves adding at least one highly branched polycarbonate as defined in any of claims 1 to 4, or obtainable using a process as defined in any of claims 10 to 11, before and/or during and/or after the emulsion polymerization.

14. The use of at least one highly branched polycarbonate as defined in any of claims 1 to 4, or obtainable using a process as defined in any of claims 10 to 11, as an additive for a coating composition comprising an emulsion polymer based on at least one ethylenically unsaturated monomer M), for improving the development of hardness in the coatings produced therefrom.

15. The use of at least one highly branched polycarbonate as defined in any of claims 1 to 4, or obtainable using a process as defined in any of claims 10 to 11, as an additive for a coating composition comprising an emulsion polymer based on at least one ethylenically unsaturated monomer M), for enhancing the ultimate hardness of the coatings produced therefrom.

## Revendications

1. Dispersion polymère aqueuse Pd), contenant :
- un polymère en émulsion d'au moins un monomère α,β-éthyléniquement insaturé M) et
- au moins un polycarbonate hautement ramifié, qui comprend au moins un radical alcényle en C₈ à C₃₂ contenant au moins une double liaison carbone-carbone.

2. Dispersion polymère selon la revendication 1, dans laquelle le polycarbonate hautement ramifié comprend au moins un radical alcényle en C₈ à C₃₂ contenant au moins deux doubles liaisons carbone-carbone.

3. Dispersion polymère selon l'une quelconque des revendications précédentes, contenant au moins un polycarbonate hautement ramifié, qui peut être obtenu par mise en réaction d'au moins un carbonate organique (A) avec au moins un alcool au moins trifonctionnel (B) et au moins un composé (C), le composé (C) comprenant
- un radical alcényle en C₈ à C₃₂ contenant au moins une double liaison carbone-carbone, et
- un groupe fonctionnel réactif avec les groupes hydroxyles ou les groupes carbonate.

4. Dispersion polymère selon l'une quelconque des revendications précédentes, contenant au moins un polycarbonate hautement ramifié, qui présente un degré de ramification DB de 10 à 95 %, de préférence de 25 à 90 %, notamment de 30 à 80 %.

5. Dispersion polymère selon l'une quelconque des revendications précédentes, dans laquelle le monomère M) est choisi parmi les esters d'acides mono- et dicarboxyliques α,β-éthyléniquement insaturés avec des alcanols en C₁-C₂₀, les composés aromatiques de vinyle, les esters d'alcool vinylique avec des acides monocarboxyliques en C₁-C₃₀, les nitriles éthyléniquement insaturé, les halogénures de vinyle, les halogénures de vinylidène, les acides carboxyliques et sulfoniques monoéthyléniquement insaturés, les monomères contenant du phosphore, les esters d'acides mono- et dicarboxyliques α,β-éthyléniquement insaturés avec des alcanediols en C₂-C₃₀, les amides d'acides mono- et dicarboxyliques α,β-éthyléniquement insaturés avec des aminoalcools en C₂-C₃₀, qui comprennent un groupe amino primaire ou secondaire, les amides primaires d'acides monocarboxyliques α,β-éthyléniquement insaturés et leurs dérivés N-alkyle et N,N-dialkyle, les N-vinyllactames, les composés de N-vinylamide à chaîne ouverte, les esters d'alcool allylique avec des acides monocarboxyliques en C₁-C₃₀, les esters d'acides mono- et dicarboxyliques α,β-éthyléniquement insaturés avec des aminoalcools, les amides d'acides mono- et dicarboxyliques α,β-éthyléniquement insaturés avec des diamines, qui comprennent au moins un groupe amino primaire ou secondaire, les N,N-diallylamines, les N,N-diallyl-N-alkylamines, les hétérocycles azotés à substitution vinyle ou allyle, les éthers de vinyle, les monooléfines en C₂-C₈, les hydrocarbures non aromatiques contenant au moins deux doubles liaisons conjuguées, les (méth)acrylates de polyéther, les monomères comprenant des groupes urée, les monomères de vinyle contenant des groupes réticulants et leurs mélanges.

6. Dispersion polymère selon l'une quelconque des revendications précédentes, dans laquelle, pour la fabrication du polymère en émulsion, par rapport au poids total des monomères utilisés, au moins 40 % en poids, de préférence au moins 60 % en poids, de manière particulièrement préférée au moins 80 % en poids, d'au moins un monomère M1) est utilisé, qui est choisi parmi les esters d'acides mono- et dicarboxyliques α,β-éthyléniquement insaturés avec des alcanols en C₁-C₂₀, les composés aromatiques de vinyle, les esters d'alcool vinylique avec des acides monocarboxyliques en C₁-C₃₀, les nitriles éthyléniquement insaturés, les halogénures de vinyle, les halogénures de vinylidène et leurs mélanges.

7. Dispersion polymère selon la revendication 6, dans laquelle, pour la fabrication du polymère en émulsion, par rapport au poids total des monomères utilisés, jusqu'à 60 % en poids, de préférence jusqu'à 40 % en poids, de manière particulièrement préférée jusqu'à 20 % en poids d'au moins un monomère M2) est en outre utilisé, qui est choisi parmi les acides mono- et dicarboxyliques éthyléniquement insaturés et les anhydrides et semi-esters d'acides dicarboxyliques éthyléniquement insaturés, les (méth)acrylamides, les (méth)acrylates d'hydroxyalkyle en C₁-C₁₀, les hydroxyalkyl(méth)acrylamides en C₁-C₁₀, les (méth)acrylates de polyéther, les monomères comprenant des groupes urée, les (méth)acrylates d'acétoacétoxyalkyle, les acétoacétoxyalkyl(méth)acrylamides et leurs mélanges.

8. Peinture, contenant :
- une dispersion polymère aqueuse Pd), telle que définie dans l'une quelconque des revendications 1 à 7,
- éventuellement au moins un pigment,
- éventuellement au moins une charge,
- éventuellement des adjuvants supplémentaires et
- de l'eau.

9. Peinture selon la revendication 8, sous la forme d'un vernis transparent ou peinture sous la forme d'une peinture en dispersion.

10. Procédé de fabrication d'un polycarbonate hautement ramifié, qui comprend au moins un radical alcényle en C₈ à C₃₂ contenant au moins une double liaison carbone-carbone, selon lequel au moins un carbonate organique (A) est mis en réaction avec au moins un alcool au moins trifonctionnel (B) et au moins un composé (C), choisi parmi les acides monocarboxyliques en C₈ à C₃₂ contenant au moins une double liaison carbone-carbone ou leurs dérivés, choisis parmi les anhydrides, les halogénures et les esters.

11. Procédé selon la revendication 10, selon lequel
a) au moins un carbonate organique (A) est mis en réaction avec au moins un alcool au moins trifonctionnel (B) avec élimination d'alcools pour former un produit de condensation (K),
b) le produit de condensation (K) est encore mis en réaction avec élimination d'alcools pour former un polycarbonate hautement ramifié (P), au moins une partie des alcools éliminés étant éliminée du mélange réactionnel,
au moins un composé (C) étant en outre utilisé pour la réaction à l'étape b), qui comprend un radical alcényle en C₈ à C₃₂ contenant au moins une double liaison carbone-carbone et un groupe fonctionnel réactif avec les groupes hydroxyle ou les groupes carbonate et/ou le polycarbonate hautement ramifié (P) étant mis en réaction après l'étape b) avec au moins un composé (C), au moins un acide monocarboxylique en C₈ à C₃₂ étant utilisé en tant que composé (C), qui est choisi parmi l'acide palmitoléique, l'acide oléique, l'acide linoléique, l'acide linolénique, l'acide éléostéarique, les acides gras d'huile de lin, les acides gras d'huile de soja, les acides gras de graines de coton, les acides gras d'huile de tournesol, les acides gras d'huile de carthame, les acides gras d'huile de ricin, les acides gras d'huile de poisson, les acides gras de graisse de coco, les acides gras d'huile de palmiste, les acides gras d'huile de colza, les acides gras d'huile d'oïticica, les acides gras d'huile de bois, les acides gras d'huile de ricin, les acides gras d'huile de tallol, les acides gras d'huile de pavot, les acides gras d'huile de noix, les acides gras d'huile de chanvre et leurs dérivés et mélanges.

12. Polycarbonate hautement ramifié, obtenu par un procédé selon lequel au moins un carbonate organique (A) est mis en réaction avec au moins un alcool au moins trifonctionnel (B) et au moins un composé (C), choisi parmi les acides monocarboxyliques en C₈ à C₃₂ contenant au moins une double liaison carbone-carbone ou leurs dérivés, choisis parmi les anhydrides, les halogénures et les esters.

13. Procédé de fabrication d'une dispersion polymère aqueuse Pd), par polymérisation en émulsion radicalaire d'au moins un monomère M), selon lequel avant et/ou pendant et/ou après la polymérisation en émulsion, au moins un polycarbonate hautement ramifié, tel que défini dans l'une quelconque des revendications 1 à 4, ou pouvant être obtenu par un procédé tel que défini dans l'une quelconque des revendications 10 à 11, est ajouté.

14. Utilisation d'au moins un polycarbonate hautement ramifié, tel que défini dans l'une quelconque des revendications 1 à 4, ou pouvant être obtenu par un procédé tel que défini dans l'une quelconque des revendications 10 à 11, en tant qu'additif pour un agent de revêtement, qui contient un polymère en émulsion à base d'au moins un monomère éthyléniquement insaturé M), pour améliorer le développement de dureté des revêtements fabriqués à partir de celui-ci.

15. Utilisation d'au moins un polycarbonate hautement ramifié, tel que défini dans l'une quelconque des revendications 1 à 4, ou pouvant être obtenu par un procédé tel que défini dans l'une quelconque des revendications 10 à 11, en tant qu'additif pour un agent de revêtement, qui contient un polymère en émulsion à base d'au moins un monomère éthyléniquement insaturé M), pour augmenter la dureté finale des revêtements fabriqués à partir de celui-ci.
